(19) Europäisches Patentamt
European Patent Office
Office européen des brevets

(11) **EP 4 315 592 B1**

(12) **EUROPÄISCHE PATENTSCHRIFT**

(45) Veröffentlichungstag und Bekanntmachung des Hinweises auf die Patenterteilung:
**15.10.2025 Patentblatt 2025/42**

(21) Anmeldenummer: **22718931.3**

(22) Anmeldetag: **29.03.2022**

(51) Internationale Patentklassifikation (IPC):
**H02S 20/00** *(2014.01)*

(52) Gemeinsame Patentklassifikation (CPC):
**H02S 20/00;** Y02E 10/50

(86) Internationale Anmeldenummer:
**PCT/EP2022/058217**

(87) Internationale Veröffentlichungsnummer:
**WO 2022/207610 (06.10.2022 Gazette 2022/40)**

(54) **PHOTOVOLTAIK-EINHEIT FÜR GEWÄSSER**

PHOTOVOLTAIC UNIT FOR WATERS

UNITÉ PHOTOVOLTAÏQUE POUR LES EAUX

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **30.03.2021 DE 102021108107**

(43) Veröffentlichungstag der Anmeldung:
**07.02.2024 Patentblatt 2024/06**

(73) Patentinhaber: **DCH Holding GmbH**
**57080 Siegen (DE)**

(72) Erfinder:
• ZHANG, Gang
57080 Siegen (DE)
• SCHULTE, Enno
57080 Siegen (DE)

(74) Vertreter: **Beckmann, Jürgen**
**Dr. Jürgen Beckmann**
**Patentanwalt**
**An der Baumschule 23**
**57462 Olpe (DE)**

(56) Entgegenhaltungen:
**WO-A1-2010/026542     US-B2- 9 741 883**

## Beschreibung

Die Erfindung betrifft eine Photovoltaik-Einheit für den Einsatz auf Gewässern, insbesondere auf dem Meer.

Weltweit hat die Photovoltaik (im folgenden "PV" abgekürzt) in den beiden Jahrzehnten nach 2000 eine dramatische Weiterentwicklung erfahren. Dabei gibt es auch eine Entwicklungsrichtung zum Bau von PV-Kraftwerken auf Binnengewässern und im maritimen Bereich.

Die EP 3 845 826 A1 beschreibt z.B. eine schwimmende Struktur mit Solarmodulen, die zur Optimierung der Sonneneinstrahlung im Azimutwinkel veränderlich ist, wobei die Solarmodule unter die Wasseroberfläche absenkbar sind. Weiterhin ist es aus der WO 2010/026542 A1 bekannt, Solarmodule auf Binnengewässern dicht unterhalb der Wasseroberfläche anzuordnen, um deren Effizienz zu steigern.

Vor diesem Hintergrund war es Aufgabe der vorliegenden Erfindung, Mittel zum effizienten und sicheren Betrieb von Photovoltaik-Einheiten auf insbesondere maritimen Gewässern bereitzustellen.

Diese Aufgabe wird durch eine PV-Einheit nach Anspruch 1 sowie durch ein Verfahren nach Anspruch 12 gelöst. Vorteilhafte Ausgestaltungen sind in den Unteransprüchen enthalten.

Soweit in der nachfolgenden Beschreibung Zahlenwerte für Parameter genannt werden, sind diese in der Regel als ungefähre Angaben zu verstehen, sodass typischerweise auch Zahlenwerte in einem Bereich von ± 25% ebenfalls mitgemeint sind. Bei der Nennung von Abstufungen bevorzugter Parameterwerte sind auch alle Zwischenwerte implizit mitgenannt.

Die erfindungsgemäße PV-Einheit soll insbesondere für den Einsatz auf Gewässern wie Binnenseen oder vor allem dem Meer einsetzbar sein. Sie dient der Erzeugung elektrischer Energie aus eingestrahltem Sonnenlicht, wobei diese Energie typischerweise von einem Verbraucher vor Ort oder einem entfernten Verbraucher, insbesondere an Land, genutzt oder gespeichert wird. Die PV-Einheit enthält die folgenden zwei Komponenten:

- Ein Modulfeld mit mindestens einem PV-Modul.
- Einen Feldhalter, welcher dazu eingerichtet ist, das Modulfeld zwischen einer Betriebsposition an der Gewässeroberfläche und (mindestens) einer Tauchposition unterhalb der Gewässeroberfläche verlagern zu können.

Wie üblich bezeichnet der Begriff "PV-Modul" die kleinste baulich zusammenhängende Einheit mit Mitteln zur Umwandlung von eingestrahlter Lichtenergie in elektrische Energie. Die geometrische Form des PV-Moduls ist grundsätzlich beliebig. Typischerweise ist ein PV-Modul im Wesentlichen flach mit einer ebenen oder gekrümmten (beispielsweise nach außen gewölbten) Oberfläche ausgebildet und hat eine Fläche in der Größenordnung von ein bis mehreren Quadratmetern.

Das "Modulfeld" kann im einfachsten Falle aus einem einzigen PV-Modul bestehen. In der Regel enthält es jedoch mehrere PV-Module, welche über starre oder flexible mechanische und typischerweise auch elektrische Verbindungen miteinander gekoppelt sind. Das Modulfeld besteht vorzugsweise aus flexibel miteinander gekoppelten starren PV-Modulen (oder PV-Einheiten aus mehreren PV Modulen), welche im Wesentlichen feste Abstände zueinander haben. Des Weiteren umfasst das Modulfeld typischerweise einen Anschluss bzw. eine Schnittstelle, über welche von den PV-Modulen erzeugte elektrische Energie entnommen werden kann. An dieser Schnittstelle kann beispielsweise ein aufladbarer Akkumulator und/oder anderer Abnehmer der elektrischen Energie und/oder ein zum Land führendes Kabel angeschlossen werden.

In der "Betriebsposition" soll das Modulfeld an der Gewässeroberfläche sein, was definitionsgemäß bedeutet, dass sich das mindestens eine PV-Modul in einer Position befindet, in welcher es bei Sonneneinstrahlung elektrische Energie produzieren kann. Typischerweise befindet sich die sensitive Oberfläche des PV-Moduls dazu oberhalb der Wasseroberfläche. Sie kann sich jedoch gegebenenfalls auch etwas unterhalb der Wasseroberfläche befinden, wenn hierdurch die Lichtaufnahme nicht wesentlich beeinträchtigt wird.

Die "Tauchposition" liegt in einer je nach Anwendungsfall festgelegten Tiefe unterhalb der Gewässeroberfläche. Bei einem wichtigen Anwendungsfall dient die Tauchposition als "Schutzposition" und ist dadurch gekennzeichnet, dass ein dort befindliches Modulfeld den Einflüssen von Wind und/oder Wellen so weit entzogen ist, dass keine Beschädigungen zu befürchten sind. Typischerweise befindet sich die Tauchposition bzw. die Schutzposition in einer Tiefe, die dem ein- oder mehrfachen der herrschenden Wellenhöhe entspricht. Zusätzlich oder alternativ kann die Tauchposition bzw. die Schutzposition auch über die Wellenlänge, d. h. den horizontalen Abstand zwischen zwei Wellenbergen charakterisiert werden. So kann die Schutzposition beispielsweise in einer Tiefe von ca. 10%, ca. 20%, ca. 30 %, ca. 40 %, ca. 50 %, ca. 60 %, ca. 70 %, ca. 80 %, ca. 90 %, ca. 100 %, ca. 120 %, ca. 150 %, ca. 200 % oder mehr der herrschenden Wellenlänge angenommen werden. Weiterhin zusätzlich oder alternativ kann sich Tauchposition bzw. die die Schutzposition in einer Tiefe befinden, in welcher die mittlere oder maximale Strömungsgeschwindigkeit des umgebenden Wassers weniger als ca. 10 m/s, weniger als ca. 5 m/s, weniger als ca. 2 m/s, weniger als ca. 1 m/s, weniger als ca. 0,5 m/s, weniger als ca. 0,25 m/s, weniger als ca. 0,1 m/s, oder weniger als ca. 0,05 m/s beträgt. Typische absolute Zahlenwerte für die Schutzposition betragen ca. 5 m, ca. 10 m, ca. 15 m, ca. 20 m, ca. 30 m, ca. 40 m, ca. 50 m, ca. 60 m, ca. 70 m, ca. 80 m, ca. 100 m, ca. 150 m, ca. 200 m oder mehr als 200 m unter der Wasseroberfläche.

Bei einem anderen Anwendungsfall dient die Tauchposition als "Reinigungsposition", welche dadurch gekennzeichnet ist, dass die Oberfläche der PV-Module in dieser Position durch das Wasser umspült und gereinigt werden. Die Reinigungsposition liegt in der Regel verhältnismäßig dicht an der Gewässeroberfläche, beispielsweise in einem Bereich bis zu 1 m unterhalb der Ebene der Wellentäler des herrschenden Wellenganges. Insbesondere kann sie oberhalb der oben beispielhaft für die Schutzposition genannten Tiefen liegen, beispielsweise bei ca. 0 %, ca. 5 %, ca. 10 %, ca. 30 %, ca. 50 %, oder ca. 75 % der Schutzposition (gemessen von der Wasseroberfläche aus).

Ein weiterer denkbarer Anwendungsfall kann darin bestehen, dass die Stromproduktion durch eingestrahltes Sonnenlicht unterbrochen oder reduziert werden soll und die PV-Module dazu in eine Tauchposition abgesenkt werden, in welcher ein entsprechend hoher Anteil des Sonnenlichts durch das Wasser absorbiert wird. Ferner kann eine Absenkung in eine Tauchposition auch zu Zwecken der Kühlung, zu Wartungszwecken, aus verkehrstechnischen Gründen (Schiffdurchfahrt) oder dergleichen erfolgen.

Wie erläutert kann somit die genaue Lage der Tauchposition je nach Anwendungsfall und Umgebungsbedingungen in einem weiten Bereich variieren. Typischerweise kann sie ca. 5 m, ca. 10 m, ca. 15 m, ca. 20 m, ca. 30 m, ca. 40 m, ca. 50 m, ca. 60 m, ca. 70 m, ca. 80 m, ca. 100 m, ca. 150 m, ca. 200 m oder mehr als 200 m unter der Wasseroberfläche liegen. Selbstverständlich kann auch jeder Zwischenwerte zu den genannten Tiefen angenommen werden, und es kann auch mehrere Tauchpositionen geben, welche situationsabhängig (Wetter, Tageszeit etc.) angenommen werden können.

Die erfindungsgemäße PV-Einheit hat den Vorteil, dass sie auch auf offenen Gewässern sicher und effizient betrieben werden kann, da ihre PV-Module beispielsweise zum Schutz oder zur Reinigung bei Bedarf in eine geeignete Tauchposition unterhalb der Gewässeroberfläche verlagert werden können.

Grundsätzlich könnte die gesamte PV-Einheit eine schwimmende Struktur sein, welche beispielsweise durch Antriebe dynamisch in gewünschter Weise horizontal positioniert werden kann. Erfindungsgemäß ist der Feldhalter indes mit Fixierungsmitteln zur unmittelbaren oder mittelbaren Ankopplung an den Boden und/oder an die Gewässeroberfläche ausgestattet. Der Feldhalter kann durch die Fixierungsmittel an einen Punkt oder zumindest eine Fläche (Gewässeroberfläche) gekoppelt werden, sodass er in diesem Sinne in einem Festlager oder zumindest einem Loslager fixiert ist. Bei dem Boden kann es sich um den Gewässerboden oder auch Boden an Land handeln. Die Fixierungsmittel können dabei unmittelbar an den Boden ankoppeln (z.B. Anker und/oder Gewichte und/oder Pfähle), aber auch mittelbar, beispielsweise über geeignete Fixpunkte, welche ihrerseits mit dem Boden verbunden sind (z.B. künstliche Inseln, Offshorestrukturen, Fischfarmen). Das Modulfeld ist bei dieser Ausführungsform typischerweise positionsveränderlich mit dem Feldhalter gekoppelt, so dass es zwischen der Betriebsposition und einer Tauchposition unterhalb der Gewässeroberfläche verlagert werden kann. Im Übrigen ist die Form und Ausgestaltung des Feldhalters in weiten Grenzen beliebig. Insbesondere kann er eine netzartige Struktur sein mit flexiblen Zugmitteln, beispielsweise Seilen oder Ketten, und/oder mit starren Verbindungen, beispielsweise durch Stangen. Vorteilhafterweise kann die netzartige Struktur vertikal oder schräg von oben nach unten verlaufende Stränge (welche typischerweise am Boden und/oder an der Gewässeroberfläche ankoppeln) enthalten, welche durch im Wesentlichen horizontal verlaufende Stränge auf einer oder mehreren horizontalen Ebenen miteinander gekoppelt sind.

Zusätzlich oder alternativ können die Fixierungsmittel auch dazu eingerichtet sein, an einen Flugkörper wie beispielsweise einen Ballon anzukoppeln.

Der Feldhalter kann insbesondere an mindestens einem Punkt am Gewässerboden oder einem anderen geeigneten Fixpunkt fixiert sein. Vorzugsweise ist er an zwei, drei, vier oder mehr Punkten am Gewässerboden fixiert. Insbesondere können Fixierungspunkte in einer vertikalen Projektion gesehen entlang der Peripherie des Feldhalters angeordnet sein, sodass der Feldhalter zwischen ihnen im Wesentlichen an einer festen (horizontalen) Position gehalten wird. Die Fixierung des Feldhalters am Gewässerboden kann beispielsweise über mit dem Feldhalter verbundene Gewichte und/oder Bodenanker und/oder Pfähle erfolgen. Der Begriff "Fixierung" bedeutet demnach nicht unbedingt eine einstückige Verbindung mit dem Gewässerboden. Vielmehr reicht eine Anbindung an einen Punkt des Gewässerbodens, welche unter den typischerweise auftretenden Kraftbelastungen fix ist. Der Feldhalter kann im Übrigen wie bereits erwähnt intern netzartig im Wesentlichen durch starre und/oder flexible Verbindungen gebildet werden. Vorzugsweise ist die Struktur dabei so angelegt, dass die Kopplungen allein durch flexible, aber zugfeste Elemente wie beispielsweise Seile oder Ketten gebildet werden können. Des Weiteren kann der Feldhalter insbesondere senkrechte starre Strukturen wie beispielsweise Pfähle enthalten, entlang derer das Modulfeld bewegt werden kann, z.B. in gleicher Weise wie an den später beschriebenen Zylinderbojen.

Vorzugsweise enthält der Feldhalter mindestens einen Auftriebskörper, also einen Körper, welcher im Wasser einen zur Wasseroberfläche gerichteten Auftrieb erzeugt. Durch einen derartigen Auftriebskörper ist es möglich, zur Gewässeroberfläche gerichtete Kräfte auf den Feldhalter auszuüben, um ihn in einer bestimmten Konfiguration zu halten. Beispielsweise kann der Feldhalter mithilfe eines Auftriebskörpers an der Ebene der Gewässeroberfläche im Sinne eines Loslagers befestigt werden. Der Auftriebskörper kann sich bei der installierten PV-Einheit an der Gewässeroberfläche befinden und aus dem Wasser herausragen, er kann jedoch auch vollständig in das Gewässer eingetaucht sein.

Das Modulfeld ist ferner so mit dem Feldhalter gekoppelt, dass es relativ zu diesem beweglich ist, und zwar mindestens (oder ausschließlich) in einer Richtung. Bei der installierten PV-Einheit verläuft diese Richtung typischerweise vertikal, sodass das Modulfeld relativ zum Feldhalter beispielsweise nur in vertikaler Richtung beweglich ist, seine horizontale Position jedoch im Wesentlichen fixiert ist. Der am Gewässerboden und/oder an der Gewässeroberfläche fixierte Feldhalter bildet dann quasi einen Rahmen, entlang dessen sich das Modulfeld bewegen kann, um zwischen Betriebsposition und Tauchposition zu wechseln.

Bei der Verlagerung des Modulfeldes von der Betriebsposition die Tauchposition wird der Feldhalter typischerweise gegenüber der Umgebung (Meeresboden etc.) stationär bleiben, während sich das Modulfeld bewegt. Optional kann jedoch auch zumindest teilweise eine (Mit-)Bewegung des Feldhalters stattfinden. Weiterhin ist es denkbar, dass der Feldhalter insgesamt beweglich und/oder formveränderlich ist, beispielsweise Richtung Gewässerboden absenkbar.

Im Folgenden werden verschiedene vorteilhafte Weiterbildungen der PV-Einheit beschrieben, welche einzeln oder in beliebigen Kombinationen miteinander realisiert werden können.

Gemäß einer Weiterbildung ist die Kopplung zwischen Modulfeld und Feldhalter so ausgebildet, dass das Modulfeld nur bis zu einer Anschlagsposition gegenüber dem Feldhalter beweglich ist. Optional können dabei beide Richtungen der Bewegung jeweils durch eine Anschlagsposition begrenzt sein. Eine Anschlagsposition kann insbesondere für die zum Gewässerboden gerichtete Abwärtsbewegung des Modulfeldes gegeben sein, um dieses in einer bestimmten Wassertiefe zu halten und sein komplettes Absinken zum Gewässerboden zu verhindern. Für die zur Gewässeroberfläche gerichtete Aufwärtsbewegung ist ebenfalls vorteilhafterweise eine Anschlagsposition vorgesehen, beispielsweise um eine Loslösung des Feldhalters vom Modulfeld zu verhindern und/oder um im Bereich der Gewässeroberfläche definierte Kopplungseigenschaften zwischen Feldhalter und Modulfeld einzustellen, welche Einfluss auf das gesamte dynamische Verhalten der PV-Einheit haben.

Vorzugsweise enthält das Modulfeld (mindestens) einen Auftriebskörper oder ist mit mindestens einem Auftriebskörper gekoppelt. Auf diese Weise ist es möglich, eine zur Gewässeroberfläche gerichtete Kraft auf das Modulfeld auszuüben, um dieses beispielsweise in der Betriebsposition an der Gewässeroberfläche zu halten. Als Auftriebskörper eignen sich beispielsweise mit Luft gefüllte geschlossene Hohlkammern.

Zusätzlich oder alternativ kann das Modulfeld und/oder der Feldhalter (mindestens) einen Abtriebskörper mit variablem Abtrieb enthalten oder hiermit gekoppelt sein. Unter einem "Abtriebskörper" wird dabei eine Komponente verstanden, welche einen Abtrieb, d. h.

eine zum Gewässerboden gerichtete Kraft ausüben kann. Aufgrund der Variabilität des Abtriebs kann die Stärke der Abtriebskraft gesteuert werden. Vorzugsweise liegt die Abtriebskraft dabei zwischen einem Maximalwert und einem Wert von oder nahe bei Null, wobei Letzteres einem im Wasser schwebenden Körper entspricht. Optional kann die Abtriebskraft auch bis zu negativen Werten absenkbar sein, d. h. in einen Auftrieb in Richtung der Gewässeroberfläche umschlagen. Die Abtriebskraft kann insbesondere durch das Eigengewicht des Abtriebskörpers erzeugt werden, wobei sich ihre Größe nach dem Archimedischen Prinzip aus dem Unterschied zwischen dem Gewicht des verdrängten Wasservolumens und dem Gewicht des Abtriebskörpers ergibt. Eine derartige Abtriebsvariation kann in einfacher Weise durch die gesteuerte Füllung eines Hohlraumes mit einem leichten Gas wie beispielsweise Luft oder Wasserstoff ($H_2$) vorgenommen werden.

Weiterhin zusätzlich oder alternativ kann das Modulfeld und/oder der Feldhalter (mindestens) einen Auftriebskörper mit variablem Auftrieb enthalten oder hiermit gekoppelt sein. Dessen technische Realisierung kann analog zum vorstehend beschriebenen Abtriebskörper mit variablem Abtrieb erfolgen.

Verallgemeinert betrachtet bildet das gesamte Modulfeld mit den enthaltenden PV-Modulen, Verbindungen, Auftriebskörpern, Abtriebskörpern usw. eine Einheit, welche insgesamt im Wasser einen bestimmten positiven Auftrieb oder negativen Auftrieb (d.h. Abtrieb) haben kann. Dieser Gesamtauftrieb ist letztlich so einzustellen, dass er für die Annahme der Betriebsposition positiv (zur Gewässeroberfläche gerichtet) ist, und zur Annahme der Tauchposition negativ (zum Gewässerboden gerichtet). Eine solche Regulation kann beispielsweise über Abtriebskörper und/oder Auftriebskörper mit variablem Auftrieb erreicht werden.

Es wurde bereits erwähnt, dass das Modulfeld im einfachsten Falle aus einem einzigen PV-Modul bestehen kann. Vorzugsweise enthält das Modulfeld indes zwei oder mehr PV-Module, welche flexibel und/oder auf (Mindest-) Abstand miteinander gekoppelt sind. Insbesondere können mehrere PV-Module starr und/oder flexibel zu PV-Elementen gekoppelt sein, welche wiederum flexibel zum Modulfeld verbunden sind.

Bei einer weiteren Ausführungsform der Erfindung weist der Feldhalter mindestens ein im Wesentlichen vertikal verlaufendes Führungselement auf, mit dem das Modulfeld beweglich gekoppelt ist (vorzugsweise linear beweglich). Das Modulfeld kann dann in definierter Weise und auf einer definierten Bahn entlang des Führungselementes bewegt werden. Vorzugsweise sind mehrere derartige Führungselemente vorhanden, welche in der horizontalen Ebene verteilt angeordnet sind, sich typischerweise über die etwa gleiche Wassertiefe erstrecken, und entlang derer das Modulfeld bei einer Bewegung relativ zum Feldhalter geführt wird. Insbesondere können derartige Führungselemente in Abständen entlang der Peripherie des Modulfeldes angeordnet sein. Weiterhin können bei bevorzugten Ausführungsformen die Führungselemente vertikal nach oben von einer Basis des Feldhalters abstehen, die mit dem Gewässerboden verankert ist. Die Führungselemente können starre Körper sein, welche durch entsprechende Einrichtungen (Zugmittel, Stangen etc.) in ihrer vertikalen Ausrichtung gehalten werden. Zusätzlich oder alternativ können die Führungselemente Auftriebskörper enthalten, welche ihre Ausrichtung und Positionierung im Wasser bewirken. Gemäß einer weiteren Ausführungsform können die Führungselemente starre Pfähle, Stangen oder dergleichen sein, welche im oder am Boden befestigt sind.

Bei einer Weiterbildung der Erfindung weist das vorgenannte Führungselement eine beweglich gelagerte Laufeinheit auf, mit welcher das Modulfeld (insbesondere lösbar) verbunden ist oder verbindbar ist. Die Bewegung der Laufeinheit entlang des restlichen Führungselementes kann dann in definierter Weise ausgelegt werden, beispielsweise über entsprechende Wälzlager, Schwerlastrollen, oder Kunststoffgleitschienen. Vorzugsweise ist die Laufeinheit im Wesentlichen linear beweglich und/oder bezüglich der Achse des Führungselementes optional drehfest bzw. in der Drehbeweglichkeit eingeschränkt. Insbesondere kann eine Überdrehung der Laufeinheit konstruktiv ausgeschlossen sein, beispielsweise eine mehrfache Rotation um die Achse des Führungselementes.

Gemäß einer anderen Weiterbildung der Erfindung ist die Beweglichkeit des Modulfeldes gegenüber dem Feldhalter veränderlich, vorzugsweise einstellbar veränderlich. Die Veränderlichkeit kann dabei im Prinzip das gesamte Spektrum zwischen "frei beweglich" und "an einer bestimmten Position arretiert" oder ein Teilintervall hiervon abdecken (wobei "freie Beweglichkeit" praktisch zu verstehen ist und z.B. unvermeidbare Reibung beinhalten kann). Eine Reduzierung der Beweglichkeit kann beispielsweise dazu genutzt werden, die Bewegungsgeschwindigkeit des Modulfeldes zu verringern und damit die Kraftbelastungen in der PV-Einheit zu reduzieren. Insbesondere kann die Bewegung des Modulfeldes in Abwärtsrichtung oder Aufwärtsrichtung verlangsamt werden, wenn es sich einer der oben genannten Anschlagspositionen nähert. Eine vollständige Aufhebung der Beweglichkeit (Arretierung) kann dazu verwendet werden, das Modulfeld bei Bedarf und situationsabhängig (z.B. Beispiel je nach Stärke des Wellenganges) an einer gewünschten Tauchposition zu halten.

Die beschriebene Veränderlichkeit der Beweglichkeit des Modulfeldes gegenüber dem Feldhalter kann beispielsweise darin bestehen, dass bei der Auslegung (Konstruktion) einer PV-Einheit für das Einsatzgebiet (Binnengewässer, Bucht, offene See etc.) passend eine Beweglichkeit festgelegt und beispielsweise konstruktiv implementiert wird (durch Festlegung bestimmter Abstände, Anziehen von Schrauben, Vorspannen von Federelementen, die z.B. Gleitschienen auf Gleitflächen drücken und so eine definierte Reibungskraft erzeugen, etc.). Diese Beweglichkeit kann danach bei der installierten PV-Einheit unverändert bleiben. Die Veränderlichkeit der Beweglichkeit kann zusätzlich oder alternativ auch in einer Zeit-, Orts- und/oder Geschwindigkeitsabhängigkeit der Beweglichkeit bestehen. Diese kann konstruktiv implementiert sein, beispielsweise durch eine Erhöhung der Reibung in bestimmten Bewegungsabschnitten. Optional kann die Beweglichkeit auch aktiv steuerbar sein durch entsprechende mechanische, hydraulische, elektrische oder anderweitig aktiv betätigbare Einrichtungen wie beispielsweise Reibungsbremsen. Die Steuerung entsprechender Aktuatoren kann dabei beispielsweise mithilfe einer zentralen Steuereinheit auf der PV-Einheit und/oder über eine Fernverbindung erfolgen.

Quantitativ kann die "Beweglichkeit" beispielsweise durch das dynamische Verhalten einer langen Zylinderboje (s. Figuren) bei Einwirkung einer Kraft F auf das Modulfeld beschrieben werden. Wenn x die Position eines Punktes des Modulfeldes (z.B. entlang einer Führung der langen Zylinderboje (Kopplungspunkt des Modulfeldes mit der später beschriebenen Laufeinheit der langen Zylinderboje)) ist, kann hierfür beispielsweise folgende Bewegungsgleichung für die lange Zylinderboje entlang ihrer Hochachse gelten:

$$\ddot{x} = a \cdot F(t) + b \cdot x + c \cdot \dot{x}$$

Die Parameter a, b, c können dabei Konstanten sein oder abhängig von Zeit t, Ort x und/oder Geschwindigkeit x sein, wobei eine Zeitabhängigkeit beispielsweise eine explizite externe Steuerung widerspiegeln würde. Die Parameter erfassen dynamische Vorgänge wie Reibung, Dämpfung, Federverhalten, Elastizität etc. Der Parameter a beinhaltet die Information der Amplitude der einwirkenden Kraft F. Der Parameter b beinhaltet die Information der hydrostatischen Steifigkeit der langen Zylinderboje. Der Parameter c beinhaltet die Information der Dämpfungsintensität. Durch geeignete Einstellung dieser Parameter kann das gesamte hydroelastische Verhalten der PV-Einheit in Bezug auf die Einwirkung von Wellen optimiert werden.

Der im Feldhalter enthaltene Auftriebskörper kann insbesondere eine lang gestreckte Form haben, welche sich vorzugsweise durch einen Zylinder oder eine Spindel (an den Enden zugespitzte Zylinderform) grob umschreiben lässt. Das Verhältnis von Breite zu Länge des Auftriebskörpers ist dabei kleiner als eins (100%). Vorzugsweise kann es maximal den Wert 1:2 (entsprechend 50%) haben, weiterhin vorzugsweise maximal einen der Werte 40%, 30%, 20%, 10%, 5%, 2,5%, 2%, 1,5%, 1%, 0,5%, 0,1%, 0,05%, 0,01% oder weniger. Durch die lang gestreckte Form wird eine stabile Lage des Auftriebskörpers im Wasser unterstützt. Die Längserstreckung kann sich dabei insbesondere vertikal ausrichten. Vorteilhaft ist dabei auch, dass sich der Auftriebskörper in tiefe, relativ ruhige Wasserzonen erstrecken kann und dadurch zusätzlich stabilisiert wird. Die absolute Länge des Auftriebskörpers beträgt vorzugsweise mindestens 1 m, besonders bevorzugt mindestens 2 m, 3 m, 4 m, 5 m, 6 m, 8 m, 10 m, 15 m, 20 m, 25 m, 30 m, 35 m, 40 m, 45 m, 50 m, 55 m, 60 m, 65 m, 70 m, 80 m, 85 m, 90 m, 95 m, 100 m, 120 m, 150 m, 200 m oder mehr.

Wie bereits erwähnt kann der Auftriebskörper insbesondere dazu eingerichtet sein, im Wasser eine vertikale Ausrichtung anzunehmen. Zu diesem Zweck variiert beispielsweise seine Dichte entlang seiner Längserstreckung, sodass sich im Wasser ein Kopfbereich geringerer Dichte über einem Fußbereich höherer Dichte anordnet. Insbesondere kann im Fußbereich des Auftriebskörpers ein Gewicht mit höherer Dichte als der des Wassers angeordnet werden.

Gemäß einer anderen Weiterbildung kann das Modulfeld entlang des Auftriebskörpers des Feldhalters beweglich sein. Dies gilt insbesondere, wenn der Auftriebskörper wie oben beschrieben mit einer Längserstreckung vertikal im Wasser ausgerichtet ist. Der Auftriebskörper stellt dann ein Beispiel für ein Führungselement der oben beschriebenen Art dar. Die Ankopplung des Modulfeldes an den Auftriebskörper ist vorzugsweise als ein linear bewegliches Lager ausgebildet. Beispielsweise kann eine Öse des Modulfeldes einen stangenförmigen Auftriebskörper umfassen. Ebenso kann der Auftriebskörper wie bereits erwähnt eine bewegliche Laufeinheit enthalten, an welches das Modulfeld angekoppelt werden kann. Verschiedene Ausführungsformen werden später in Zusammenhang mit den Figuren näher erläutert.

Der Auftriebskörper des Feldhalters kann weiterhin ein Dämpfungselement zur Dämpfung seiner Bewegung im Wasser aufweisen. Das Dämpfungselement kann beispielsweise als eine (geschlossene oder gelochte) Platte oder Scheibe ausgebildet sein, welche senkrecht zu ihrer Fläche einen hohen Strömungswiderstand erzeugt und somit Bewegungen in diese Richtung dämpft. Das Dämpfungselement kann sich insbesondere so am Auftriebskörper befinden, dass dessen Aufwärts- und Abwärts-Bewegung im Wasser reduziert wird. Das Dämpfungselement befindet sich weiterhin vorzugsweise in einem Bereich des Auftriebskörpers, welcher im Betriebszustand entfernt von der Gewässeroberfläche liegt bzw. in verhältnismäßig ruhigen Wasserschichten.

Mindestens ein Auftriebskörper des Feldhalters kann dazu eingerichtet sein, im Betriebszustand der PV-Einheit eine Position unterhalb der Gewässeroberfläche anzunehmen (also komplett untergetaucht zu sein). Insbesondere kann es sich dabei um eine Position handeln, welche im Bereich der Tauchposition oder darunter liegt. Durch einen derartigen Auftriebskörper wird gewährleistet, dass tiefer gelegene Teile des Feldhalters korrekt ausgerichtet sind bzw. einen bestimmten Abstand vom Gewässerboden annehmen.

Gemäß einer weiteren Ausführungsform kann mindestens ein Fixierungsmittel, welches zur Ankopplung an den Boden und/oder an die Gewässeroberfläche vorgesehen ist, in vertikaler Richtung (Projektion) gesehen außerhalb der Fläche des Modulfeldes liegen. Auf diese Weise können horizontale Kräfte durch Strömungen, Wellen, Wind und dergleichen aufgenommen und die horizontale Lage des Modulfeldes fixiert werden. Besonders bevorzugt ist es, wenn mehrere Fixierungsmittel um das Modulfeld herum verteilt nach außen abstehend angeordnet sind, um Kräfte aus verschiedenen Richtungen aufnehmen zu können.

Die beschriebene PV-Einheit kann je nach Einsatzgebiet und Anforderungen dimensioniert werden. Typischerweise enthält sie ca. 100-2000 herkömmliche Solarmodule bzw. eine maximale Energieerzeugung von ca. 0,5-2 MWp.

Konstruktiv stellt die PV-Einheit in der Regel ein eigenständiges System dar, welches in einem Gewässer installiert werden kann. Optional können jedoch auch mehrere PV-Einheiten zu großen PV-Kraftwerken gekoppelt werden, indem sie über eine Fläche verteilt angeordnet und vorzugsweise untereinander durch horizontale Verbindungen gekoppelt werden.

Typischerweise ist das Modulfeld einer PV-Einheit nur einheitlich insgesamt zwischen der Betriebsposition und einer Tauchposition verlagerbar. Bei den vorstehend beschriebenen PV-Kraftwerken können indes die Modulfelder der einzelnen PV-Einheiten optional unabhängig voneinander verlagert werden. Dies ermöglicht es, je nach Situation die Modulfelder unterschiedlich abzusenken, beispielsweise entlang des Randes des PV-Kraftwerkes stärker als im mittleren Bereich.

Die Erfindung betrifft weiterhin ein Verfahren zum Betrieb einer PV-Einheit auf einem Gewässer, wobei die PV-Einheit ein Modulfeld mit mindestens einem PV-Modul enthält. Das Verfahren ist dadurch gekennzeichnet, dass das Modulfeld situationsabhängig zwischen einer Betriebsposition an der Gewässeroberfläche und einer Tauchposition unterhalb der Gewässeroberfläche verlagert werden kann.

Das Verfahren lässt sich insbesondere mit einer PV-Einheit gemäß einer der oben beschriebenen Ausführungsformen durchführen. Daher gelten die für die PV-Einheit gemachten Erläuterungen sinngemäß auch für das Verfahren und umgekehrt, auch wenn dies im Folgenden nicht eigens erwähnt wird.

Gemäß einer bevorzugten Ausführungsform des Verfahrens wird das Modulfeld bei Wellengang und/oder Sturm oberhalb einer gegebenen Stärke in die Tauchposition ("Schutzposition") verlagert, wobei dieser Wellengang und/oder Sturm bereits bestehen kann oder erst vorhergesagt ist. Die Verlagerung kann dabei über die Steuerung durch einen Benutzer veranlasst werden. Insbesondere kann sie jedoch auch automatisch erfolgen in Abhängigkeit von den Messwerten von Sensoren für Wellengang und/oder Sturm oder in Abhängigkeit von Wettervorhersagen.

Zusätzlich oder alternativ kann auch aus Reinigungszwecken eine Verlagerung in die Tauchposition ("Reinigungsposition") erfolgen. Eine solche Verlagerung kann beispielsweise automatisch in regelmäßigen Abständen und/oder dann erfolgen, wenn durch Salz- und/oder Schmutzablagerungen der Wirkungsgrad der Module unter einen vorgegebenen Wert gefallen ist.

Gemäß einer anderen Option kann die Verlagerung in die Tauchposition erfolgen, wenn aus bestimmten Gründen (z.B. Fehlverhalten der Anlage) die Stromproduktion unterbrochen oder reduziert werden soll.

Schließlich kann die Tauchposition auch angefahren werden, wenn die Sonneneinstrahlung (z.B. nachts) unterhalb eines vorgegebenen Minimalwertes liegt und die Module (z.B. aus Sicherheitsgründen) besser unter Wasser als an der Gewässeroberfläche aufgehoben sind.

Die Verlagerung des Modulfeldes kann auf verschiedene Weisen realisiert werden. Beispielsweise könnten am Gewässerboden fixierte Zugmittel ein mit Auftrieb konstruiertes Modulfeld zwangsweise unter die Gewässeroberfläche ziehen. Bei einer bevorzugten Ausführungsform findet die Verlagerung indes durch eine Veränderung des Auftriebs und/oder Abtriebs des Modulfeldes und/oder von mindestens einem mit dem Modulfeld gekoppelten Körper statt. Mit anderen Worten kann der Zustand des Modulfeldes zwischen "schwimmend", "schwebend" und "sinkend" variiert werden.

Da die erfindungsgemäße PV-Einheit aus zwei separaten Komponenten besteht, nämlich dem Modulfeld einerseits und dem Feldhalter andererseits, stellen diese eigenständig verkehrsfähige Komponenten dar. Unter den Schutzbereich der Erfindung fallen demnach selbstständig auch Modulfelder, welche für eine PV-Einheit gemäß einer der obigen Ausführungsformen geeignet sind, sowie Feldhalter, welche für eine PV-Einheit gemäß einer der oben beschriebenen Ausführungsformen geeignet sind.

Ebenso kann es sich bei den Auftriebskörpern gemäß den oben beschriebenen Ausführungsformen um eigenständig verkehrsfähige Komponenten handeln und damit um eigenständige Aspekte der Erfindung.

Im Folgenden wird die Erfindung mithilfe der Figuren anhand von Ausführungsbeispielen näher erläutert. Dabei zeigt:

Figur 1	eine schematische perspektivische Gesamtansicht einer installierten PV-Einheit;

Figur 2	die Seitenansicht eines einzelnen PV-Elements mit angehängtem Abtriebskörper;

Figur 3	eine Draufsicht des PV-Elements von Figur 2;

Figur 4	eine Seitenansicht eines Modulfeldes mit an den PV-Elementen angehängten Abtriebskörpern;

Figur 5	eine Seitenansicht eines Modulfeldes mit zwischen den PV-Elementen angehängten Abtriebskörpern;

Figur 6	eine separate perspektivische Ansicht eines installierten Feldhalters;

Figur 7	eine perspektivische Ansicht eines langgestreckten Auftriebskörpers (Positionsboje) mit vertikal wirkendem Dämpfungselement und einer zylinderförmigen Laufeinheit;

Figur 8	einen Schnitt durch die Laufeinheit von Figur 7;

Figur 9	eine perspektivische Ansicht von zwei Ausführungsformen eines langgestreckten Auftriebskörpers mit vertikal wirkendem und horizontal wirkenden Dämpfungselementen und einer Laufeinheit in einer Linearführung;

Figur 10	eine Detailansicht des Kopfbereiches der Auftriebskörper von Figur 9;

Figur 11	eine Detailansicht eines Beispiels des Fußbereiches eines langgestreckten Auftriebskörpers mit einer gepufferten Anschlagsposition, Bojenhalter und Arretierungseinheit in einer Perspektive (links) und einer Seitenansicht (rechts);

Figur 12	eine Detailansicht eines Beispiels des oberen Bereiches eines langgestreckten Auftriebskörpers mit Bojenhalter und Arretierungseinheit;

Figur 13	die Gesamteinsicht eines aus einer Vielzahl von PV-Einheiten aufgebauten PV-Kraftwerkes;

Figur 14	das PV-Kraftwerk von Figur 13 ohne PV-Module und PV-Elemente;

Figur 15	eine Draufsicht auf das PV-Kraftwerk von Figur 13;

Figur 16	eine Seitenansicht des PV-Kraftwerks von Figur 13.

Die in den Figuren beschriebene Ausführungsform der Erfindung stellt eine in großen Teilen flexible Struktur mit möglichst geringen Strömungswiderständen dar, die sich außerdem durch die Möglichkeit der vertikalen Absenkung wesentlicher Funktionskomponenten, die durch sehr starken Wind und sehr hohe Wellen an der Meeresoberfläche zerstört werden könnten, auszeichnet. Die Ausführungsform bezieht sich auf kleine und große maritime Photovoltaik-Kraftwerke (PV-Kraftwerke). Photovoltaik-Kraftwerke dieser Art können selbstverständlich auch in Binnenseen und geschützten Buchten betrieben werden. Die in den Beispielen erwähnten Merkmale lassen sich dabei immer auch separat und unabhängig von den übrigen Merkmalen der dargestellten Ausführungsbeispiele verwirklichen.

PV-Kraftwerke können modular aus einer geeigneten Gruppierung von Photovoltaik-Einheiten (PV-Einheiten) aufgebaut sein. Eine PV-Einheit 100 kann beispielsweise eine Größe von einem Megawatt peak (1 MWp) haben und beispielsweise aus einhundert PV-Elementen 130 mit je zehn Kilowatt peak Leistung (10 kWp) bestehen. PV-Elemente 130 können über einen festen oder zumindest teilweise flexiblen Rahmen mit einem bestimmten Auftrieb in Verbindung mit einem einstellbaren Abtrieb verfügen. Die kleinste Einheit der photovoltaischen Energieerzeugung ist das einzelne PV-Modul 131. Die PV-Module werden in geeigneter Weise und Anzahl auf den PV-Elementen 130 positioniert.

Zur besseren Erklärung beziehen sich die folgenden Beschreibungen primär auf eine einzelne PV-Einheit 100. Die hier beschriebene Entwicklung löst das Problem übergroßer mechanischer Belastungen der PV-Einheiten unter anderem durch den Wellengang mit einem neuartigen konzeptuellen Ansatz und spezifischen konstruktiven Details.

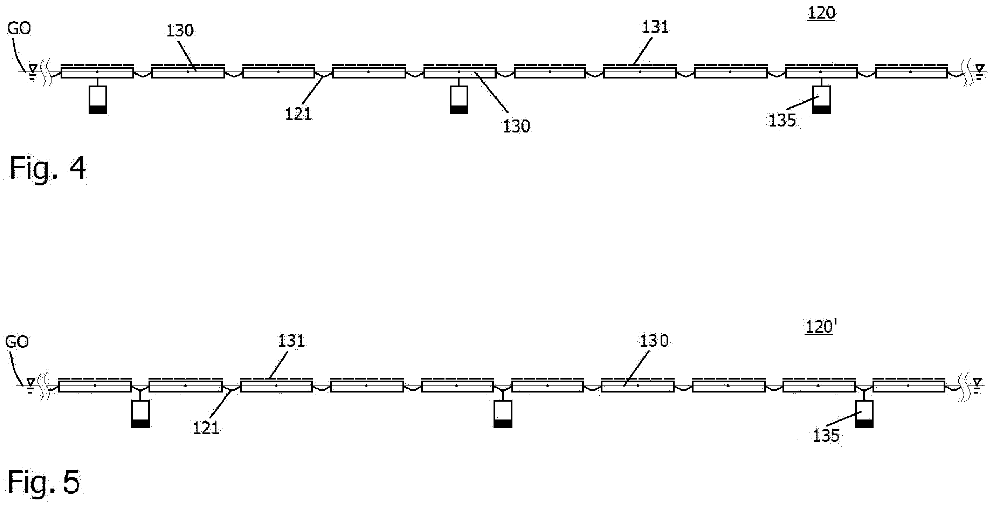

Bis zu einem bestimmten Wellengang (maximaler Betriebswellengang) befinden sich die einzelnen PV-Elemente 130 in geeigneter vorgesehener Höhe an der Wasseroberfläche GO, so dass die PV-Module 131 sich in optimaler Höhe über der Wasseroberfläche befinden. Die PV-Elemente 130 sind miteinander elastisch mit Seilen und/oder Abstandshaltern (121 in Figur 4, 5) zu einem Modulfeld 120 so verbunden, dass sie im Fall einer ruhigen und ebenen Meeresoberfläche einen definierten Abstand zueinander haben und die Summe der PV-Elemente die Grundform der PV-Elementefläche bildet, die sich an Meeresoberfläche befindet (z.B. ein quadratisches Feld).

Bei zunehmendem Wellengang folgen die PV-Elemente 130 im Prinzip der Wellenbewegung, bis zu einer Grenze, dem maximalen Betriebswellengang. Übersteigt der aktuelle Wellengang den maximalen Betriebswellengang, oder ist entsprechend der Wettervorhersage mit dem Überschreiten innerhalb kurzer Zeit zu rechnen, werden die PV-Elemente 130 der PV-Einheit 100 in ihrer Gesamtheit unter die Wasseroberfläche abgesenkt, und so aus dem Einflussbereich der Wellenbewegung der Wasseroberfläche heraus genommen. Durch die Wellen an der Wasseroberfläche induzierte Druckschwankungen und unter anderem oszillierende Wasserbewegungen nehmen mit der Wassertiefe stark ab. Ab einer geeigneten Wassertiefe ist die Beeinflussung des Wassers in der Tiefe durch die dynamischen Prozesse an der Wasseroberfläche so gering, dass die dort hin abgesenkten PV-Elemente 130 nur noch eine geringe dynamische Belastung erfahren. Die notwendige Absenktiefe ist die für die PV-Elemente geeignete Wassertiefe, hier als "Schutztiefe ST" definiert, in der die dynamischen Kräfte und Wasserbewegungen der Wellen an der Wasseroberfläche und zusätzlicher Strömungskräfte auf ein dauerhaft ertragbares niedriges Niveau gesunken sind. Die Schutztiefe ST ist dabei ein stellvertretendes Beispiel für eine allgemeine "Tauchposition", bis zu welcher die PV-Module aus verschiedenen Gründen (z.B. zu Reinigungszwecken) abgesenkt werden können.

Zusätzliche Strömungskräfte entstehen auch durch weitere Meereswasserströmungen, z.B. durch die Gezeiten aber auch durch andere regionale und überregionale Wasserströmungen. Diese Strömungen werden in erster Linie parallel zur horizontalen Ebene der PV-Elemente 130 vorliegen und müssen als eine der auftretenden Belastungen der Konstruktion berücksichtigt werden.

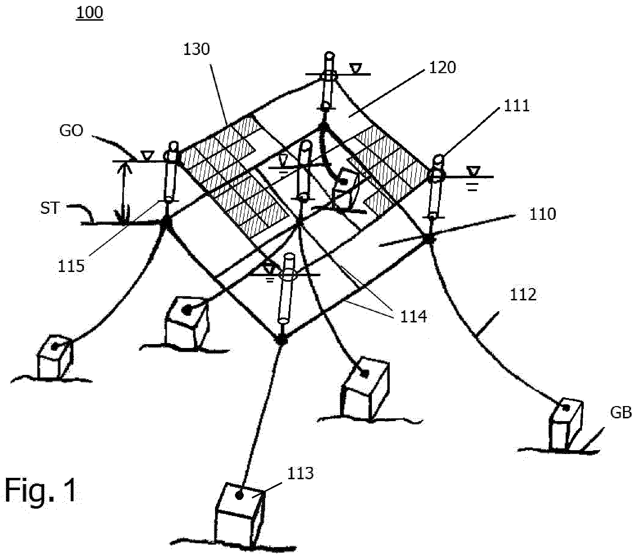

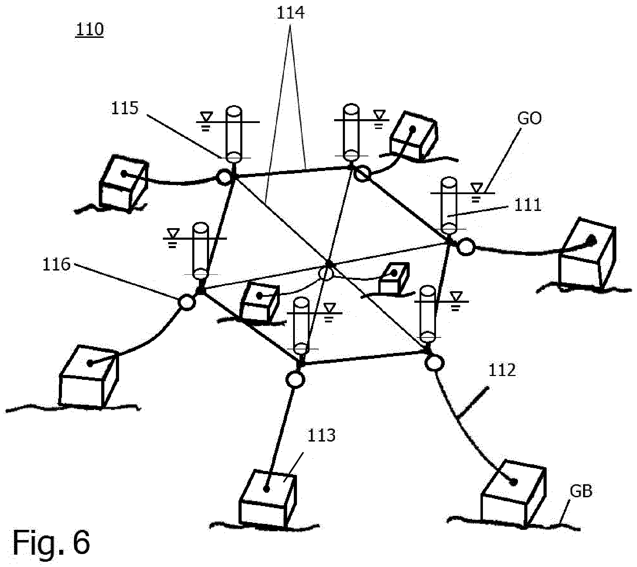

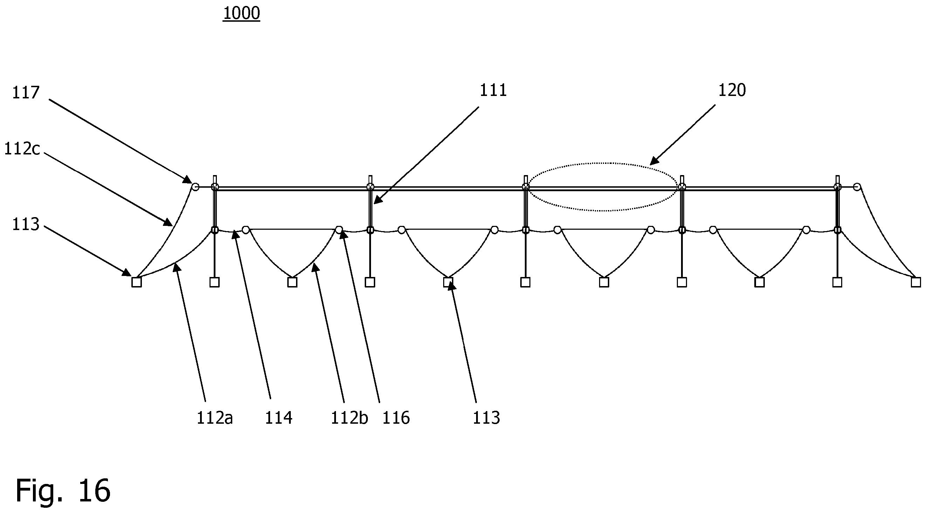

Für den Absenkvorgang wird der Auftrieb der PV-Elemente 130 soweit verringert, dass diese absinken. Grundsätzlich besteht hier die Problematik, das Absinken auf eine bestimmte Tiefe zu begrenzen, da ein einmal sinkender Körper unter Wasser im Prinzip stets bis auf den Grund absinkt. Vorliegend wird die Absinktiefe auf einfache und bisher nicht bekannte Weise begrenzt und definiert, indem in der definierten Schutztiefe ST vertikale Begrenzungen 115 (Figur 1, "Anschlagsposition") geschaffen werden, die das weitere Absinken der PV-Elemente 130 in der Schutztiefe stoppen. Die vertikalen Begrenzungen sind mit geeigneten Verbindungsmitteln mit z.B. den später erläuterten Positionsbojen 111 verbunden, die das Gewicht der abgesenkten PV-Elemente tragen. Es können an geeigneter Stelle, vorzugsweise an der Höhe der Schutztiefe ST oder darunter, auch Bojen unter Wasser positioniert werden (z.B. Stabilisierungsbojen 116, Figuren 6, 16). Das Absinken der PV-Elemente 130 stoppt, wenn diese von den vertikalen Begrenzungen 115 am weiteren Absinken gehindert werden. Die "Feldhalter 110" genannte Struktur A mit ihren z.B. Positionsbojen 111 nimmt in diesem Fall die vertikale Last der Struktur B ("Modulfeld 120" aus PV-Einheiten 130) auf. Optional könnte in der Schutztiefe auch der Abtrieb der PV-Einheiten 130 bis zum oder nahe an den Schwebepunkt verringert werden.

Der Absenkvorgang des Modulfeldes 120 kann zusätzlich oder alternativ auch dadurch gestoppt bzw. verlangsamt werden, dass am Modulfeld nach unten hängend befestigte Gewichte (nicht dargestellt) in geeignet eingestellter Tiefe auf dem Gewässerboden aufsetzen und somit keine Zugkraft mehr ausüben.

Zur weiteren Erläuterung wird eine mögliche Ausführungsvariante einer PV-Einheit 100 beschrieben. Grundsätzlich kann die PV-Einheit vorteilhaft grob in zwei zusammenhängende Funktions-Makrostrukturen gegliedert werden.

Struktur A, auch "Feldhalter" 110 genannt, ist die Positionierungsstruktur für die gesamte PV-Einheit (Figur 1). Sie besteht im Prinzip aus Zugmitteln, Positionsbojen (und ggf. weiteren Auftriebskörpern), mechanischen Kopplungen und geeigneten Befestigungspunkten. Als Positionsbojen oder/und Befestigungspunkte können auch Offshore-Windanlagen, Strukturen von Fischfarmen, Bohrinseln und jegliche anderen geeigneten Strukturen verwendet werden. Struktur A bildet eine horizontale Begrenzung für die PV-Elemente 130 an der Meeresoberfläche GO (Arbeitsposition) und in einer definierten Schutztiefe ST (Tauchposition) aus. Dazu hat die Struktur A Verbindungen zum Meeresgrund GB und/oder zum Festland und/oder anderen Fixpunkten, um die Positionsbojen 111 mit einer geeigneten Genauigkeit an einer horizontalen Position des Meeres zu positionieren. Die Verbindungen zum Meeresgrund können mit Zugmitteln 112, z.B. mit Seilen, Ketten oder Stangen hergestellt werden. Die Befestigung von Zugmitteln am Meeresgrund erfolgt an z.B. geeignet dimensionierten Gewichten 113 (z.B. Betonkörpern), die am Meeresgrund positioniert sind, oder an anderen Fixpunkten.

Struktur B ist ein Modulfeld 120, bestehend aus den PV-Elementen 130. Struktur B (Modulfeld 120) wird von Struktur A (Feldhalter 110) in den gewünschten beschriebenen Positionen (Arbeitsposition, Tauchposition) gehalten. Die PV-Elemente 130 verfügen über einen veränderlichen Auftrieb, der z.B. zentral gesteuert wird (beispielsweise in einer nicht dargestellten Kontrolleinheit am Feldhalter oder per drahtloser Kommunikation von Land aus). In der Arbeitsposition schwimmt das Modulfeld 120 selbständig, die horizontale Position wird durch die Struktur A vorgegeben. Wenn die Tauchposition angefahren werden soll, wird der Auftrieb der PV-Elemente 130 so weit verringert, dass das Modulfeld 120 von der Arbeitsposition bis zur Tauchposition absinkt. In der Tauchposition wird Struktur B, das Modulfeld 120, von der Struktur A, dem Feldhalter 110, in vertikaler Position (Tauchposition) und in horizontaler Position gehalten. Für die Absenkung des Modulfeldes können zum Beispiel alle PV-Elemente 130 an sich über eine stabile horizontale Lage verfügen, damit es beim Absenken des Modulfeldes nur zu minimierten Kraftwirkungen (Kontakt- und Reibkräften, ohne Verkantungen oder Verspannungen) in den Verbindungsstellen von Struktur A und Struktur B und zwischen den einzelnen PV-Elementen kommt.

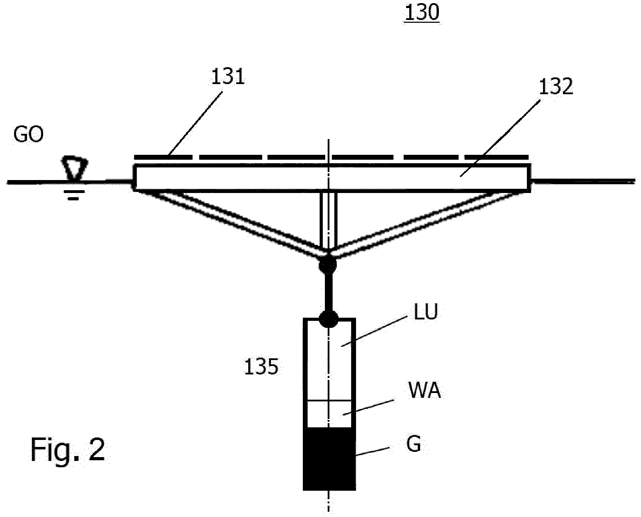

Ein PV-Element 130 (Figur 2) trägt typischerweise mehrere PV-Module 131 und ist ein eigenständig schwimmfähiges Modul des Modulfeldes 120: Es besteht beispielsweise aus einem festen oder zumindest teilweise flexiblen Rahmen 132 aus geeignetem Material, z.B. seewasserbeständigem Kunststoff und/oder Metall und/oder einem anderen Material mit einem definierten Auftrieb und einem unter der Wasseroberfläche GO liegenden Abtriebskörper 135. Der Abtriebskörper 135 verfügt über einen steuerbaren Abtrieb. Der Gewichtsschwerpunkt eines PV-Elementes liegt unter dem Auftriebsschwerpunkt und damit ist eine stabile Lage des PV-Elementes 130 gewährleistet. Um das PV-Element abzusenken wird der Abtrieb soweit erhöht, bis das PV-Element absinkt. Zum Auftauchen wird Abtrieb soweit reduziert, bis der Auftrieb aus dem Rahmen 132 die Abtriebskräfte übersteigt, und das PV-Element 130 an die Wasseroberfläche steigt.

In Figur 2 ist im Schnitt schematisch ein Abtriebskörper 135 erkennbar. Dieser besteht aus einem rundum geschlossenen Volumen, welches mit einem Gewicht G, mit Wasser WA, und mit Luft LU gefüllt ist. Die Anteile von Wasser und Luft können dabei von außen steuerbar verändert werden, um somit einen gewünschten Abtrieb in Richtung Gewässerboden einzustellen. Der Abtriebskörper 135 kann dazu eine Pumpe (nicht dargestellt), elektrische Verbindungen und/oder eine Kommunikationseinrichtung (beispielsweise zur schallbasierten Kommunikation) enthalten.

Für den Betrieb elektrischer Einrichtung wie beispielsweise von Motoren, Pumpen oder dergleichen weist die PV-Einheit 100 die erforderlichen elektrischen Versorgungleitungen sowie optional Energiespeicher (z.B. Akkumulatoren, nicht dargestellt) auf, aus denen die benötigte elektrische Energie entnommen werden kann. Zusätzlich oder alternativ können auch einige PV-Module permanent an der Gewässeroberfläche verbleiben und nicht mit abgesenkt werden, um eine Notstromversorgung zu gewährleisten.

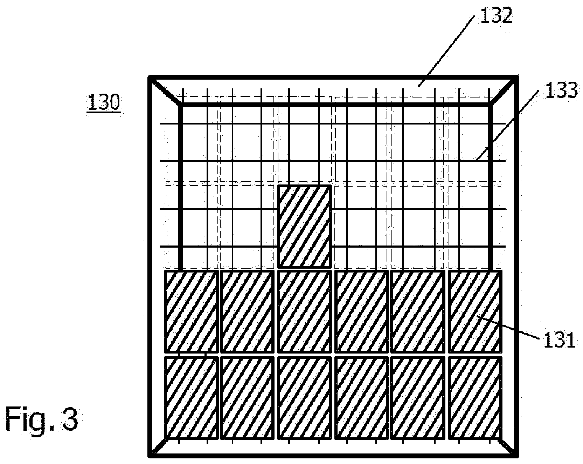

Insgesamt sollen die einzelnen PV-Elemente 130 wenig Auftrieb haben und die PV-Module 131 nah am Wasser positioniert werden. Je näher die einzelnen PV-Module am Wasser sind, desto besser ist der Wirkungsgrad der PV-Module durch die Kühlwirkung des Wassers. Die PV-Module 131 können beispielsweise auf gespannten Seilen 133, die an dem Rahmen 132 des PV-Elementes befestigt sind, befestigt werden (Figur 3). Die PV-Module können aber auch selbst schwimmfähig sein und innerhalb des Rahmens, z.B. mit Seilen in Position gehalten werden. Die einzelnen PV-Module 131 werden so befestigt und/oder mit elastischen Abstandshaltern versehen, so dass sie sich nicht gegenseitig berühren.

Nicht jedes PV-Element 130 muss mit einem Abtriebskörper ausgestattet sein, es ist alternativ ausreichend, wenn geeignete Abtriebskörper 135 nur in bestimmten Abständen vorhanden sind (Figur 4, 5). Durch beispielsweise geringen Auftrieb und die Lagestabilität jedes einzelnen PV-Elementes 130 und die Verbindung der PV-Elemente miteinander zu einem Modulfeld 120 (Struktur B), kann das Modulfeld auch durch wenige Abtriebskörper in die Tauchposition abgesenkt werden. Dabei wirkt der erzeugte steuerbare Abtrieb an den Positionen der Abtriebskörper 135 und wird über die Verbindungen 121 (z.B. Seile) der PV-Elemente 130 auf das gesamte Modulfeld 120 verteilt. Ein beispielsweise quadratisches Modulfeld 120 einer PV-Einheit 100, bestehend aus z.B. einhundert PV-Elementen 130 (Seitenlängen bestehend aus je zehn PV-Elementen) kann beispielsweise durch neun Abtriebskörper 135 gesteuert in die Tauchposition verbracht werden. Die Abtriebskörper 135 können dabei z.B. an den Ecken des Quadrates, in der Mitte der Längsseiten und im Zentrum des Quadrates positioniert sein. Beim Absinken bilden die mit z.B. Seilen 121 verbundenen PV-Elemente 130 durch ihren Auftrieb eine leicht nach oben gewölbte Form, wobei die tiefsten Punkte der Wölbungen jeweils die Positionen des Angriffes des Abtriebs der Abtriebskörper 135 sind. Das Modulfeld 120 hat hier die Tendenz, sich horizontal zusammen zu ziehen. Die Wölbung ist durch geeignet schwachen Auftrieb der einzelnen PV-Elemente und geeignet schwachen Abtrieb der Abtriebskörper so zu begrenzen, dass an den mechanischen Kopplungen zwischen der Positionierungsstruktur 110 (Struktur A) und dem Modulfeld 120 die horizontalen Verbindungskräfte gering bleiben. Des Weiteren kann wie bereits beschrieben der Feldhalter durch seine Randstruktur (insbesondere durch nach außen auskragende Verbindungen mit dem Gewässerboden) so stabil gestaltet werden, dass er die Tendenz des Zusammenziehens des Modulfeldes kompensiert und er unabhängig von der vertikalen Position des Modulfeldes seine Form behält.

Die Verbindungen zwischen Struktur A (Feldhalter 110) und Struktur B (Modulfeld 120) werden vorzugsweise mit spezifischen mechanischen Kopplungen geschaffen, die in der Arbeitsposition nur die Bewegung der Struktur B gegenüber der Struktur A in horizontaler Richtung verhindern. In der Tauchposition wird ein weiterer Freiheitsgrad, die Bewegung in vertikaler Richtung wie vorher bereits beschrieben von der Struktur A nach unten begrenzt. Technisch können diese mechanischen Kopplungen z.B. durch geeignete Linearführungen realisiert werden. So können sich z.B. Seilschlaufen oder z.B. elastische oder feste Ringe mit geeignetem Spiel in horizontaler Ebene um im Prinzip gerade vertikale Strukturen hoch und runter bewegen. Als vertikale Strukturen können z.B. die Positionsbojen 111 der Struktur A an sich, oder an den Positionsbojen angebrachte lineare in der Vertikalen verlaufende Gebilde (z.B. Stangen, gespannte Seile, Führungen, etc.) realisiert werden. So kann das Modulfeld 120 in vertikaler Richtung den Wellenbewegungen folgen, denen es bis zum Erreichen des maximalen Betriebswellenganges ausgesetzt ist. Die beschriebenen mechanischen Kopplungen können auch an Offshore-Windanlagen, Strukturen von Fischfarmen, Bohrinseln und jegliche anderen geeigneten Strukturen angebracht werden.

In der Tauchposition definieren Begrenzungen 115 die Absinktiefe des Modulfeldes 120. Die Begrenzungen 115 können z.B. dickere Körper (Kugeln, Stäbe, Auflager, Anschlagflächen, etc., vgl. Figuren) sein, über welche eine Führungsöse des Modulfeldes oder z.B. eine Laufeinheit 111d (s.u.) nicht hinwegrutschen kann. Auf den Begrenzungen ruhen die beschriebenen Verbindungselemente zwischen Struktur A und Struktur B und leiten die Gewichtskräfte des Modulfeldes 120 der Struktur B in der Tauchposition in die Struktur A (Feldhalter 110) ein. Die Positionsbojen 111 der Struktur A nehmen jetzt das zusätzliche Gewicht durch die Struktur B auf.

Grundsätzlich muss die Struktur A einer PV-Einheit 100 unter anderem über eine genügende Positionsstabilität verfügen, so dass sie Struktur B, das Modulfeld in ausreichender Weise auf Position hält und in der Tauchposition eine genügend stabile vertikale Begrenzung für die Struktur B bereit stellt. Dazu ist die Ausrichtung der Zugmittel 112, die die Gewichte 113 am Meeresgrund/oder andere geeignete Fixpunkte z.B. mit den Positionsbojen 111 der Struktur A verbinden, so auszuführen, dass Struktur A ein Feld bildet, welches die Struktur B in beschriebener Weise führen bzw. positionieren kann. Dazu können beispielsweise die Gewichte 113 in geeignetem horizontalen Abstand um das gebildete Feld der Struktur A am Meeresgrund positioniert werden, so dass Zugkräfte in den Zugmitteln Vertikalkräfte nur in einem Maße bewirken, die von den Positionsbojen 111 durch ihren Auftrieb kompensiert werden können. Auch können Zugmittel an Positionsbojen 111 im Inneren und an den Längsseiten des gebildeten Feldes befestigt werden, um die Verbindung zum Grund, bzw. den Gewichten 113 am Grund/oder geeigneten Fixpunkten zu verstärken.

Wie aus Figur 1 erkennbar ist, liegen die Gewichte 113 zur Ankopplung an den Boden in alle Richtungen radial nach außen abstehend von einer vertikalen Projektion der Fläche des Modulfeldes 120 auf den Meeresboden.

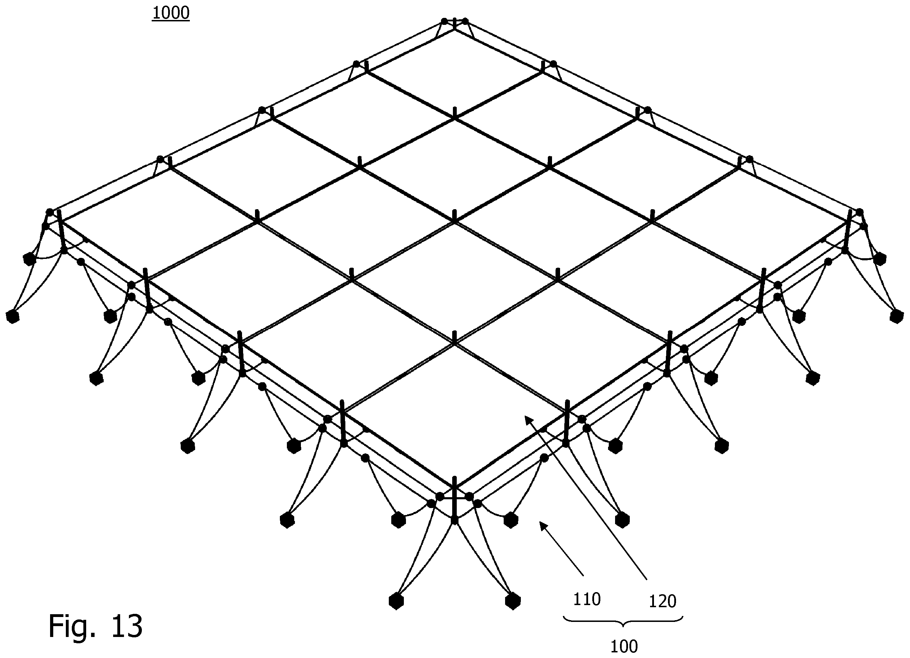

Auch das obere, an der Gewässeroberfläche liegende Ende der Positionsbojen 111 kann optional über Zugmittel mit dem Gewässerboden gekoppelt sein (Figuren 13, 14, 16). Auf diese Weise lässt sich durch einen radialen Zug nach außen ein Zusammenziehen des Modulfeldes (Flächenverkleinerung) verhindern. Derartige Zugmittel werden dabei vorzugsweise über an der Gewässeroberfläche schwimmende Umlenkbojen (117, Figur 16) geleitet, um an den Positionsbojen im Wesentlichen nur horizontale Kräfte wirken zu lassen.

Insgesamt sind die an der PV-Einheit 100 wirkenden Kräfte durch Wind und Wellengang und weitere Strömungen zu minimieren. Dies wird erreicht, indem die Komponenten der PV-Einheit möglichst geringe Angriffsflächen für die Strömungen bieten. Dies kann beispielsweise durch die Verwendung von Zugmitteln wie z.B. Seilen erreicht werden. Die gesamte PV-Einheit ist dadurch für Strömungen durchlässig, sie setzt Wellen und Strömungen nur einen geringen Widerstand entgegen. Weiterhin ist das gesamte System vorzugsweise flexibel und kann sich elastisch verformen. Damit kann es bei punktuellen Krafteinwirkungen (z.B. brechenden Wellen) nachgeben und so die Belastungen des Systems gering halten. Die PV-Elemente 130 können aus festen Strukturen in beschriebener Weise entstehen. Die Problematik größerer Angriffsflächen der PV-Module 131 auf den PV-Elementen 130 und damit der PV-Elemente wird gelöst, indem das Modulfeld 120 in die Tauchposition in beschriebener Weise abgesenkt werden kann.

Generell ist der Auftrieb der verwendeten Auftriebskörper (z.B. Positionsbojen 111) so groß wie nötig (für eine sichere Positionierung der PV-Einheit) und so gering wie möglich zu wählen (für eine minimierte Einwirkung von Kräften, die unter anderem durch Wellengang auf das System einwirken).

Zur Minimierung der Strömungskräfte an den Positionsbojen 111 können diese eine optimierte Form mit spezifischer Auftriebsgeometrie haben. Beispielsweise kann eine Positionsboje eine längliche zylindrische Form haben (optional auch mit veränderlichen Durchmessern entlang der Hochachse der Boje), in deren unterem Bereich sich ein geeignet dimensioniertes Gewicht befinden kann. Die Kippstabilität kann aber auch durch Anbringung von Fixierungsmitteln im unteren und/oder oberen Bereich der Boje erreicht werden. Damit verfügen die Positionsbojen über eine große Kippstabilität und ermöglichen so eine gute horizontale Positionierungsstabilität für die Struktur B, das Modulfeld.

Weiterhin ist es vorteilhaft, wenn die Positionsbojen 111 über eine möglichst geringe Auftriebsänderung bei Veränderung der Eintauchtiefe verfügen. Dies wird z.B. durch eine schlanke Form (z.B. Rohr) der Boje zumindest im Bereich des Wellenangriffes erreicht. So werden sich z.B. beim Durchgang einer Welle, die Zugkräfte an den Zugmitteln, die die Boje in Position halten, nur in einem verträglich geringem Maße erhöhen und die gesamte Struktur verbleibt in relativer Ruhe.

Ein weiterer Vorteil einer geeigneten Auftriebsgeometrie, z.B. einer länglichen zylindrischen Bojenform ist, dass sich die unteren Teile der Boje bereits in einer ruhigen Wasserschicht befinden und so die Bewegung der gesamten Positionsboje dämpfen. Auch können die Positionsbojen bei sehr hohem Wellengang komplett von Wasser überspült werden. Denkbar sind auch andere beliebige Auftriebsgeometrien, wie z.B. durch Zugmittel aneinander gekoppelte z.B. Kugelbojen, die zu einer Art Kette aufgereiht sein können. Weiterhin können zusätzliche Bojen (z.B. Stabilisierungsbojen 116, Figuren 6, 16) so tief unter Wasser positioniert werden, dass sie unbeeinflusst (oder nur geeignet gering beeinflusst) von den dynamischen Kräften durch die Wellenbewegung für gleichmäßigen Auftrieb sorgen und im Zusammenwirken mit den Positionsbojen das beschriebene Bilden der Struktur A unterstützen können.

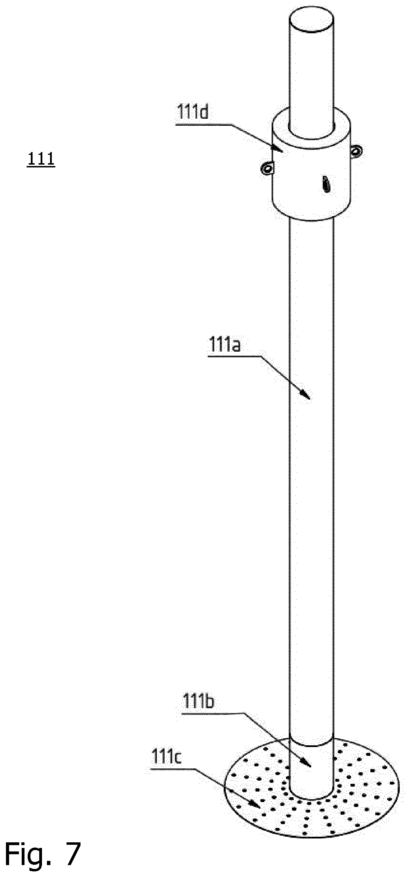

Nachfolgend werden unter Bezugnahme auf die Figuren 7 bis 12 bevorzugte Ausführungsformen der Positionsbojen 111 näher erläutert.

Durch die Wellenbewegung entstehen unter anderem neben Reibungs- und Druckkräften an der Boje auch Trägheitskräfte. Diese sind proportional zum verdrängten Wasservolumen und der Wasserbeschleunigung, in Richtung der Wasserbeschleunigung gerichtet.

Die hier beschriebene zylindrische Positionsboje 111 mit vertikaler Ausdehnung wird im Weiteren "lange Zylinderboje" genannt (Fig. 7). Sie besteht im Wesentlichen aus einem zylindrischen hohlen Bojenrohr 111a, an dessen Fußpunkt ein Gewicht 111b angeordnet ist. Das Verhältnis von Durchmesser und Gesamtlänge der Boje (Länge des Bojenrohres 111a + Länge des Gewichts 111b) ist vorzugsweise kleiner als 1:2, besonders bevorzugt kleiner als 1:10. Je kleiner das Verhältnis von Durchmesser zu Gesamtlänge ist und je größer die Gesamtlänge ist, desto geringer wird die Auftriebsänderung durch die Wellenbewegung an der Oberfläche. Dadurch wird die vertikale Bewegung der Positionsboje 111 im Vergleich zu der Wellenbewegung geringer.

Um die Auf- und Abwärtsbewegungen der langen Zylinderboje 111 zusätzlich zu dämpfen, kann z.B. am unteren Ende des Gewichtes 111b eine vertikale Strömungsbremse in Form z.B. einer (horizontal verlaufenden) runden Platte als Dämpfungselement 111c angebracht sein (auch mehrere vertikale Strömungsbremsen übereinander sind denkbar). Während der Aufwärtsbewegung verursacht die vertikale Strömungsbremse 111c einen Widerstand, der der Aufwärtsbewegung entgegenwirkt. Ebenso wirkt die vertikale Strömungsbremse der Abwärtsbewegung der Boje entgegen. Insgesamt wirkt die vertikale Strömungsbremse als bewegungsdämpfendes Element und verhindert sicher Resonanzschwingungen der Boje.

Um günstige Strömungsverhältnisse an der vertikalen Strömungsbremse 111c zu erzeugen, kann die vertikale Strömungsbremse optional mit einem Lochmuster versehen werden, durch das bei der Auf- und Ab-Bewegung der Boje 111 (durch den Wellengang an der Meeresoberfläche) Wasser strömt. Dort und an den Umströmungskanten am Außenradius der vertikale Strömungsbremse verwirbelt das Wasser in der Regel turbulent. Die vertikale Strömungsbremse 111c hat bewusst in vertikaler Richtung eine sehr geringe Ausdehnung (Dicke), um für horizontale Strömungen nur einen sehr geringen Widerstand zu bieten; in horizontaler Richtung hingegen ist die Ausdehnung groß, um die Auf- und Ab-Bewegung der langen Zylinderboje 111 zu dämpfen. Die horizontalen Strömungen, für die der Widerstand durch die gewählte Form minimal wird, sind z.B. Tidenströmungen und lokale oder regionale Strömungen.

Die lange Zylinderboje 111 ist somit so konzipiert, dass Bewegungen der Boje im Bereich der Meeresoberfläche minimiert werden. Dies wird durch folgende Maßnahmen erreicht:

1) Die oben genannten Druck-, Reibungs- und Trägheitskräfte sind in horizontaler Richtung über die ganze Bojenlänge minimiert bzw. optimiert. Durch die optionale Wahl eines runden Querschnittes werden gleiche Verhältnisse für Druck- und Reibungskräfte aus allen Anströmrichtungen geschaffen. Denkbar ist auch eine Durchmesserverringerung der Zylinderboje 111 in oberen Wasserschichten, um dort die Angriffsfläche für Druck- und Reibungswiderstände sowie das verdrängte Volumen zur Minderung der Trägheitskräfte weiter zu minimieren. Die vertikale Strömungsbremse 111c im unteren Bereich hat ein minimales Volumen und somit minimale Trägheitskräfte (sofern diese in unteren Wasserschichten überhaupt noch praktisch relevant sind). Außerdem bietet sie durch die horizontale Ausrichtung horizontalen Strömungen eine minimierte Angriffsfläche.

2) Widerstandsminimierung in vertikaler Richtung im oberen Bereich der Boje, d.h. im Bereich von relevanter Wellenbewegung, durch eine glatte Geometrie und Oberfläche ohne unstetige Absätze, Kanten und herausstehende Funktionskomponenten.

3) Widerstandsmaximierung in vertikaler Richtung im unteren Bereich der Boje, d.h. im Bereich der von der Wellenbewegung praktisch unbeeinflussten Wasserschichten, z.B. durch die beschriebene Strömungsbremse oder mehrere Strömungsbremsen.

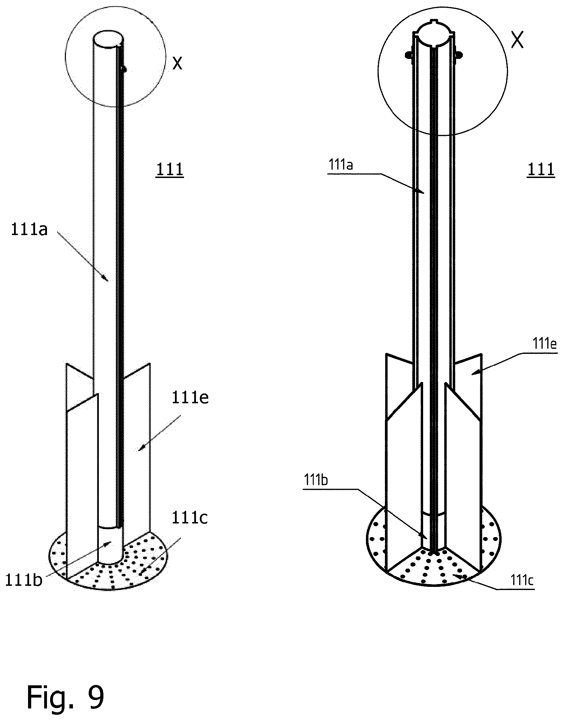

Denkbar sind auch horizontal wirkende Dämpfungselemente 111e (Figur 9) im unteren Bereich der langen Zylinderboje 111, die sozusagen eine Einspannung der langen Zylinderboje in praktisch unbewegten unteren Wasserschichten bewirken. Horizontal wirkende Dämpfungselemente können dann vorteilhaft sein, wenn keine wesentlichen horizontalen Strömungen vorhanden sind. Zusätzlich dämpfen die horizontal wirkenden Dämpfungselemente auch die Rotation der langen Zylinderboje um ihre Hochachse.

Durch die Konstruktion der langen Zylinderboje 111 (Gewicht 111b im untersten Bereich, Auftrieb durch das Bojenrohr 111a stets oberhalb des Gewichtes) entwickelt die lange Zylinderboje immer Rückstellkräfte, wenn sie durch äußere Kräfte ausgelenkt wird. Sobald sie z.B. durch horizontale Kräfte im oberen, wellenbeeinflussten Bereich wie z.B. durch horizontale Kräfte des angebundenen PV-Feldes aus der Vertikalen geneigt wird, entwickelt sie ein Rückstellmoment, bzw. eine horizontale Rückstellkraft. Auch in vertikaler Richtung strebt die lange Zylinderboje immer die Balance von Auftriebs- und Gewichtskraft an.

Falls die eigenen Ausrichtkräfte der Zylinderboje 111 nicht ausreichen (z.B. entlang des Randes einer PV-Einheit), kann zusätzlich am oberen Ende ein im Wesentlichen horizontal ziehendes Zugmittel angebracht werden, welches beispielsweise über an der Oberfläche schwimmende Umlenkbojen (117 in Figur 16) mit dem Gewässerboden verbunden ist.

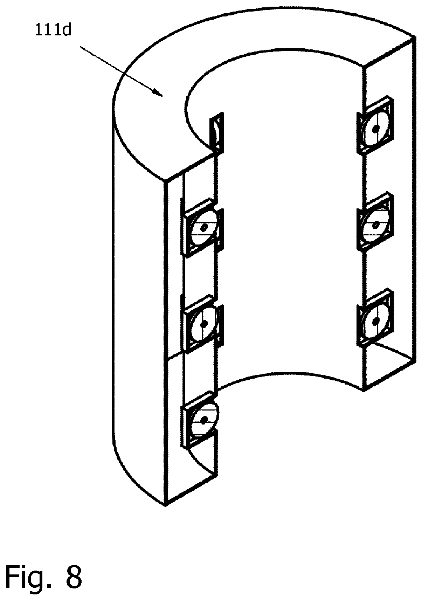

Die Kopplung des Modulfeldes 120 an den Feldhalter 110 kann insbesondere an der langen Zylinderboje 111 erfolgen. In der Ausführungsform von Figur 7 und 8 erfolgt die Kopplung beispielsweise über eine Laufeinheit 111d, die gegenüber der langen Zylinderboje in horizontaler Richtung fest geführt und in vertikaler Richtung bewegbar ist. Die Laufeinheit 111d kann dabei insbesondere auch als Abtriebskörper (mit festem oder variablem Abtrieb) ausgestaltet sein, also eine Sinktendenz haben. Alternativ kann die Laufeinheit 111d als Auftriebskörper (mit festem oder variablem Auftrieb) ausgestaltet sein, oder zwischen Auftrieb und Abtrieb einstellbar sein. Die Laufeinheit 111d kann beispielsweise die Form eines Hohlzylinders haben, welcher das zylinderförmige Bojenrohr 111a mit etwas Spiel umgibt. Vorzugsweise ist die Drehbeweglichkeit der Laufeinheit 111d um die vertikale Achse des Bojenrohres 111a aufgehoben oder zumindest eingeschränkt (beispielsweise über Rückstellkräfte).

Die Anbindung des Modulfeldes 120 an Verbindungsstellen der Laufeinheit 111d (z.B. die in Figur 7 erkennbaren Ösen) kann fest, biegbar, drehbar und/oder flexibel erfolgen. Eine flexible Verbindung mindert die Verformung und Belastung der Komponenten am Rande des Modulfeldes 120.

Weiterhin verfügt die lange Zylinderboje 111 vorzugsweise über mechanische Anschläge am oberen (nicht dargestellt) und unteren Ende der Bewegungsstrecke der Laufeinheit 111d.

Die Anbindung des horizontalen Modulfeldes 120 erfolgt z.B. über die Laufeinheit 111d. Dadurch geht der Kraftfluss in horizontaler Richtung typischerweise ununterbrochen durch Feldhalter 110 und Modulfeld 120 (gegebenenfalls mit Ausnahme von Randbereichen). In vertikaler Richtung ist eine Bewegung der Laufeinheit 111d möglich. Die vertikale Kopplung von Feldhalter und Modulfeld mittels der Laufeinheit 111d ist vorzugsweise steuerbar ausgeführt, so dass die axialen Kräfte (in Richtung der Bojenlängsachse) einstellbar sind (permanent vorab durch konstruktive Maßnahmen und/oder dynamisch während des Betriebs).

Die Laufeinheit 111d dient damit zur Kopplung von horizontalen und vertikalen Kräften zwischen Feldhalter 110 und Modulfeld 120, in horizontaler Richtung mit einer vollständigen Übertragung des Kraftflusses der horizontalen Kräfte, in vertikaler Richtung vorzugsweise mit veränderlichen, einstellbaren Eigenschaften.

Diese Einstellbarkeit wird z.B. über

1) mechanische Komponenten (formschlüssige Paarung Zahnräder/Zahnstangen, Kugellager, Rollenlager, Anpresswalzen etc.),

2) hydraulische Komponenten (Druckkissen, Hydraulikzylinder, die definiert Gleitschienen an die Laufflächen pressen, etc.),

3) elektrische Komponenten (Linearmotor, magnetisch, induktiv etc.) und/oder

4) über Variation der Auftriebskraft der Laufeinheit 111d
realisiert.

Die Einstellbarkeit führt insbesondere dazu, dass die Beweglichkeit des Modulfeldes gegenüber dem Feldhalter veränderlich ist. Insbesondere kann durch die Einstellbarkeit die Lagerung in vertikaler Richtung von einer praktisch widerstandsfreien Beweglichkeit stetig bis hin zur vollständigen Arretierung variiert werden.

Die freie vertikale Beweglichkeit kann z.B. im normalen Betriebszustand bei Betrieb des Modulfeldes an der Meeresoberfläche realisiert werden. In Figur 8 ist in diesem Zusammenhang ein mittiger axialer Schnitt durch die Laufeinheit 111d dargestellt. Darin ist erkennbar, dass die Laufeinheit über (z.B. zwölf) drehbare Führungsrollen mit der Zylinderboje in Kontakt steht. Durch Steuerung der Drehbarkeit dieser Führungsrollen kann die Beweglichkeit der Laufeinheit 111d variiert werden.

Weiterhin kann z.B. durch Verringerung der Auftriebskraft bei freier Beweglichkeit ein Absinken der Laufeinheit 111d mit dem Modulfeld 120 in eine der bereits beschriebenen Positionen (Tauchposition etc.) realisiert werden. Dort z.B. kann dann die Laufeinheit 111d arretiert werden durch Fixierung der Führungsrollen.

Ein wesentlicher weiterer Vorteil der einstellbaren Kopplungskräfte in vertikaler Kopplungsrichtung ist, dass auch das hydroelastische Verhalten des horizontalen Modulfeldes 120 beeinflusst werden kann. Durch eine geeignete Einstellung der Beweglichkeit können die Wellenparameter der sich durch das Modulfeld bewegenden Wellen beeinflusst werden. Dabei kommt es zu einer Dissipation von Wellenenergie, wenn die Auf- und Abbewegung der Laufeinheit 111d durch die Wellenbewegung durch die eingestellten Kopplungskräfte gebremst wird. Mit der veränderlichen Kraftsteuerung in vertikaler Richtung an einer langen Zylinderboje können auch mehrere Modulfelder in ihrem hydroelastischen Verhalten beeinflusst werden, wenn die lange Zylinderboje entsprechend gleichzeitig mit den Modulfeldern gekoppelt ist. Auch kann man sich zusätzliche lange Zylinderbojen innerhalb eines horizontalen Modulfeldes als vertikale Führungen vorstellen. Wenn mehrere Modulfelder, die nahe beieinander platziert sind, zusammen eine größere zusammenhängende horizontale PV-Fläche bilden (PV-Kraftwerk 1000, Figuren 13 bis 16), befinden sich somit innerhalb der Gesamtfläche geeignet viele lange Zylinderbojen, die durch Steuerung der vertikalen Kopplungskraft an jeder langen Zylinderboje eine Optimierung des hydroelastischen Verhaltens der Gesamtfläche ermöglichen. Durch geeignet eingestellte vertikale Kopplungskräfte können die Wellenbewegungen gedämpft und so im Inneren der Modulfelder wesentlich reduziert werden. Die Beweglichkeit (Kopplungsstärke) kann dabei an allen Zylinderbojen gleich sein oder an jeder Zylinderboje individuell eingestellt werden. Insbesondere können am Rand des PV-Kraftwerkes bzw. der PV-Einheit andere Kopplungsverhältnisse vorliegen als in inneren Bereichen.

Die beschriebene lange Zylinderboje ermöglicht das geführte Absenken von Modulfeldern in z.B. die Schutzposition bei gleichzeitiger Rückstellwirkung.

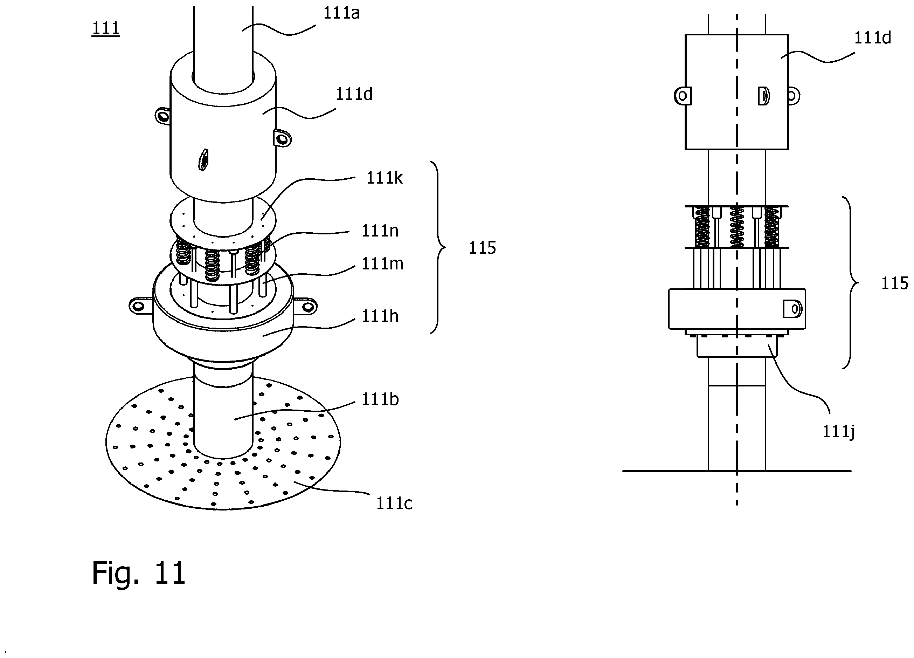

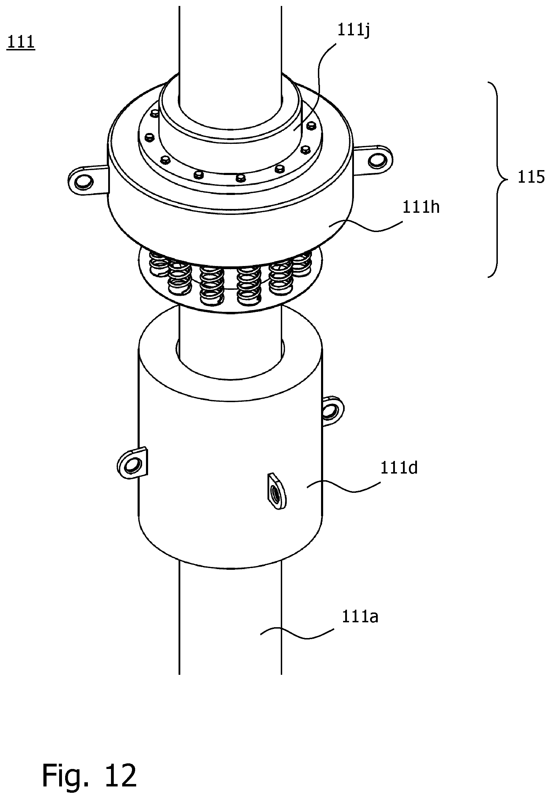

Optional können die langen Zylinderbojen 111 auch dazu eingerichtet sein, mit dem Modulfeld 120 abgesenkt zu werden. Wenn die Zylinderboje ausreichend lang ist (z.B. in der Betriebsposition um den Hub des Modulfeldes aus dem Wasser herausragt), bleibt bei abgesenkter Position immer ein Teil von ihr über der Wasseroberfläche, während der Feldhalter dabei seine Struktur bzw. Form behält. Die horizontale Positionierung des gesamten Systems kann hier von entsprechenden Hilfsbojen (z.B. den Stabilisierungsbojen 116, Umlenkungsbojen 117) übernommen werden. In diesem Fall ist die Kopplung von Bojenhalter 111h und Bojenrohr 111a im oberen und unteren Bereich in vertikaler Richtung frei beweglich (Figuren 11, 12). Die Arretierung der Arretierungseinheit 111j ist dann im oberen und unteren Bereich aufgehoben.

In der Figur 9 sind zwei alternative Ausgestaltungen einer langen Zylinderboje 111 dargestellt. Wie bei der vorherigen Ausführungsform enthält diese ein Bojenrohr 111a mit einem unten daran ansetzenden Gewicht 111b sowie vertikal wirkende und horizontal wirkende Dämpfungselemente 111c, 111e. Im links dargestellten Beispiel sind drei horizontal wirkende Dämpfungselemente 111e dargestellt, welche ungleichmäßig über den Umfang verteilt (vertikal verlaufend) angeordnet sind, während das rechts dargestellte Beispiel vier gleichmäßig über den Umfang verteilte horizontal wirkende Dämpfungselemente 111e aufweist. Selbstverständlich können auch andere Anzahlen von horizontal wirkenden und vertikal wirkenden Dämpfungselementen mit anderer Verteilung und Geometrie vorgesehen werden.

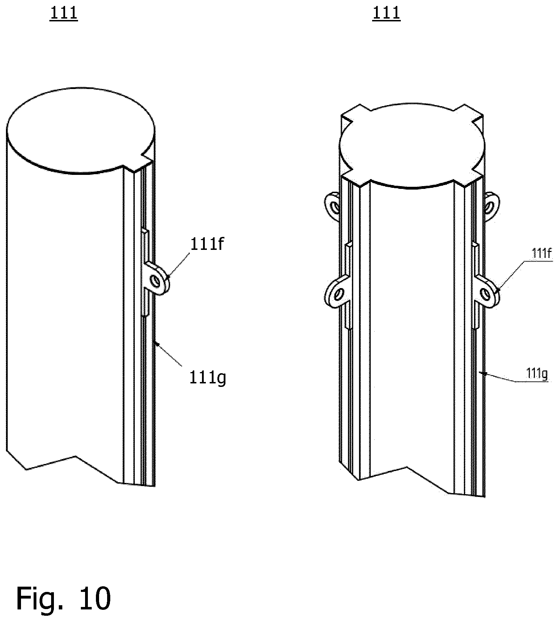

Gemäß Figur 10 ist die Ankopplung eines Modulfeldes über eine Laufeinheit 111f mit einer Öse zur Anbindung des Modulfeldes realisiert, wobei die Laufeinheit 111f in einer vertikalen Linearführung 111g (hinterschnittene Schiene) an der Oberfläche des Bojenrohres 111a geführt ist. Im in Figur 10 links dargestellten Beispiel ist dabei nur eine Linearführung 111g vorgesehen, während das rechts dargestellte Beispiel vier gleichmäßig über den Umfang verteilte Linearführungen 111g mit je einer Laufeinheit 111f aufweist.

Die geführte Bewegung einer Laufeinheit entlang einer Zylinderboje 111 oder eines anderen Führungselementes kann auch als Zwangsführung mittels Ketten, Zahnstangen, formschlüssigen Zahnrädern oder dergleichen realisiert werden.

Figur 11 zeigt eine weitere optionale Gestaltung des Fußbereiches einer Zylinderboje 111. Die untere Anschlagsposition 115 für die Laufeinheit 111d ist dabei konstruktiv so ausgestaltet, dass sie ein bestimmtes dynamisches Verhalten zeigt, nämlich die eines Puffers mit Dämpfungseigenschaften und Federeigenschaften. Konkret ist hierzu eine Anschlagplatte 111k für den Kontakt mit der Laufeinheit 111d vorgesehen, welche über Dämpfungselemente 111m (Stoßdämpfer mit Kolben und Zylinder) sowie über parallel hierzu wirkende Spiralfedern 111n mit dem Bojenhalter 111h und der Arretierungseinheit 111j verbunden sind. An dem Bojenhalter 111h können Zugmittel (nicht dargestellt) zur Verankerung der Zylinderboje 111 mit dem Gewässerboden ankoppeln. Die Arretierungseinheit 111j dient der Fixierung der Anschlagsposition 115 an einer wählbaren axialen Position des Bojenrohres 111a, wobei diese Fixierung bei Errichtung der PV-Einheit (und dann im Wesentlichen unveränderlich bleibt) oder auch dynamisch während des Betriebs der PV-Einheit erfolgen kann. Das Auftreffen der Laufeinheit 111d beim Absenken des angekoppelten Modulfeldes (nicht dargestellt) kann so in dynamisch optimierter Weise ablaufen, um beispielsweise kritische Kraftbelastungen und/oder die Entstehung von Schwingungen zu vermeiden.

Im oberen Bereich der Boje (Figur 12) kann die obere Anschlagsposition in gleicher Weise gestaltet sein. Der obere Bojenhalter 111h befindet sich oberhalb der Laufeinheit 111d, der untere Bojenhalter 111h befindet sich unterhalb der Laufeinheit 111d. Jeweils zwischen Bojenhalter 111h und Laufeinheit 111d befinden sich die Dämpfungselemente.

Wenn die Arretierungseinheiten 111j und damit die Bojenhalter 111h gegenüber dem Bojenrohr beweglich eingestellt sind, kann die gesamte lange Zylinderboje 111 mit dem Modulfeld 120 abgesenkt werden. Dabei werden die Bojenhalter 111h z.B. durch eigenen Auftrieb und/oder über geeignete Stabilisierungsbojen 116 und Anbindungsmittel wie z.B. Seile im unteren Bereich in Position gehalten. Im oberen Bereich kann der Bojenhalter 111h selbst durch seinen Auftrieb an der Gewässeroberfläche und/oder durch Stabilisierungsbojen und/oder Umlenkbojen 117 mit geeigneten Anbindungsmitteln wie z.B. Seilen in Position gehalten werden.

Wenn die Arretierungseinheiten 111j und damit die Bojenhalter 111h arretiert sind, kann das Modulfeld 120 mittels der Bewegung der Laufeinheiten 111d vertikal geführt an den langen Zylinderbojen 111 bewegt werden.

Figur 12 zeigt die optionale Gestaltung des oberen Endbereiches einer Zylinderboje 111. Der Bojenhalter 111h in Verbindung mit der Arretierungseinheit 111j bildet die obere Anschlagsposition. Die obere Anschlagsposition 115 für die Laufeinheit 111d ist dabei mithilfe von ein oder mehreren Anschlagpuffern (z.B. aus Gummi oder einem ähnlichen elastischen Material, Federn, hydraulischen Puffern etc.) so ausgestaltet, dass sie ein bestimmtes dynamisches Verhalten zeigt (Dämpfung und Elastizität).

Die in den Figuren 11 und 12 dargestellten Anschlagspositionen (Endanschläge) können unabhängig von der konkreten Darstellung in den beispielhaften Zeichnungen jeweils sowohl als untere als auch als obere Anschlagsposition verwendet werden.

Mit dem Erreichen des Endanschlages im Endlager bewirkt die dort wirkende Kraft gleichzeitig auch eine nachgebende/nachfolgende Bewegung der Zylinderboje in Richtung der Kraft, so dass hier der Endanschlag weiter abgedämpft wird.

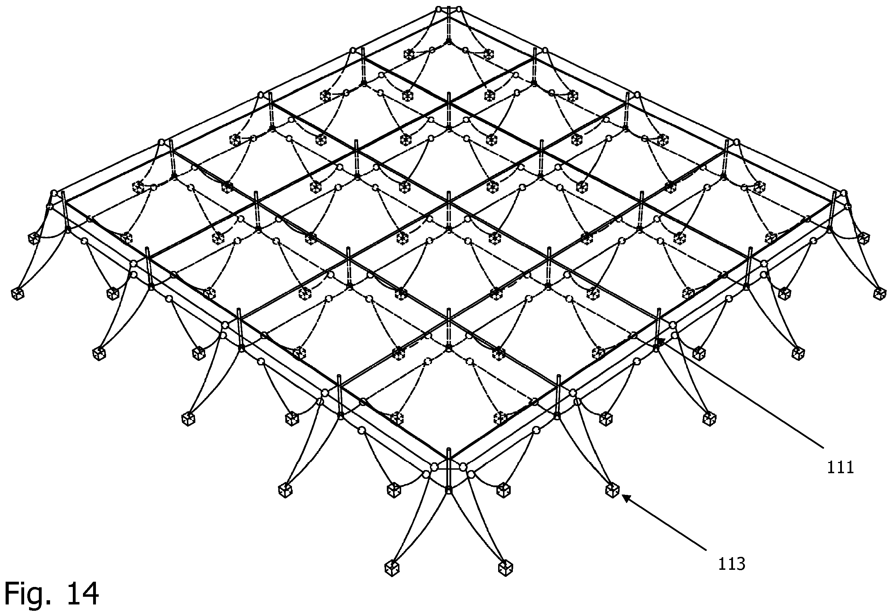

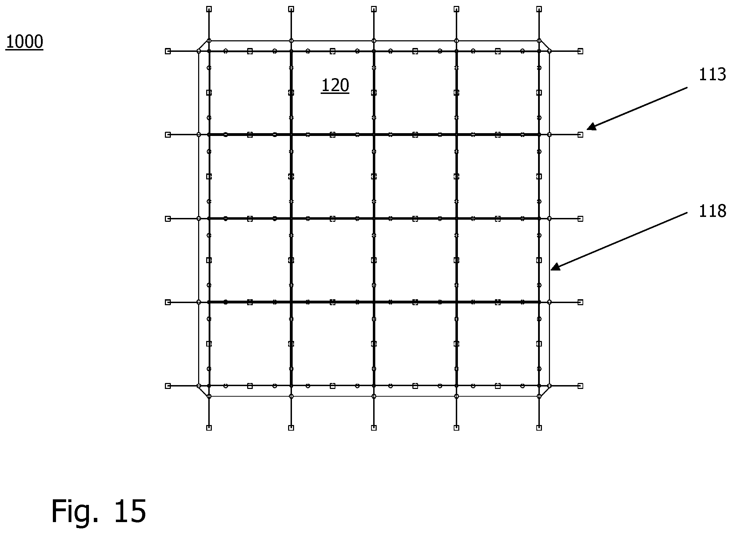

In Figur 13 ist schematisch ein PV-Kraftwerk 1000 dargestellt, welches aus einer Vielzahl von über ihre Seitenflächen miteinander gekoppelten PV-Einheiten 100 der oben beschriebenen Art aufgebaut ist. In Figur 14 ist dieses Kraftwerk 1000 ohne PV-Module (bzw. mit durchsichtigen PV-Modulen) und ohne PV-Elemente dargestellt. Figur 15 zeigt eine Draufsicht und Figur 16 eine Seitenansicht dieses Kraftwerks 1000.

Die von dem Kraftwerk 1000 erzeugte elektrische Energie kann beispielsweise über nicht näher dargestellte elektrische Kabel an Land geleitet werden, sie kann vor Ort gespeichert werden (z.B. über die Erzeugung von "grünem Wasserstoff"), oder sie kann anderweitig genutzt werden.

Die einzelnen PV-Einheiten 100 des Kraftwerks bestehen wie oben erläutert aus Modulfeldern 120, welche entlang der Positionsbojen 111 eines Feldhalters 110 zwischen einer Betriebsposition und (mindestens) einer Tauchposition verlagerbar sind. Die randständigen Positionsbojen 111 sind dabei an ihrem unteren Ende über Zugmittel 112a mit Ankerpunkten 113 am Gewässerboden verbunden, wobei diese Zugmittel im Randbereich nach außen (von der Fläche der Modulfelder wegzeigend) auskragen. Im Inneren des Kraftwerks 1000 gelegene Positionsbojen sind bei der dargestellten Ausführungsform nur mit der horizontalen Verspannung des Feldhalters 110 (interne Zugmittel 114) auf der Ebene der tiefsten Tauchposition gekoppelt. Zusätzlich oder alternativ könnten auch sie direkt mit dem Gewässerboden verbunden sein.

Im dargestellten Beispiel sind in den Randbereichen die Positionsbojen 111 auch an ihrem oberen Ende über Zugmittel 112c mit Ankerpunkten 113 am Gewässerboden gekoppelt, wobei diese Zugmittel 112c über an der Gewässeroberfläche (außerhalb der Fläche der PV-Module) schwimmende Umlenkbojen 117 geführt sind, damit die entsprechenden Zugkräfte horizontal an den Positionsbojen 111 angreifen. Die Umlenkbojen 117 können optional über eine um das Kraftwerk umlaufende Seilstruktur und/oder ein rahmenartiges Gestänge aus z.B. elastischem Rohr oder dergleichen (Außenumrahmung 118, Figur 15) miteinander gekoppelt sein.

Die an den Positionsbojen 111 angreifenden Zugmittel 112a, 112c verlaufen von der durch die PV-Module gebildeten Fläche nach außen, vorzugsweise schräg unter einem Winkel von mindestens 10°, besonders bevorzugt mindestens 20°, mindestens 30°, mindestens 45°, oder mindestens 60° zur Vertikalen.

Auf der Ebene der (tiefsten) Tauchposition kann der Feldhalter 110 im Wesentlichen horizontal verlaufende interne Zugmittel 114 aufweisen, welche über separate Zugmittel 112b mit dem Gewässerboden gekoppelt sein können.

Wie dargestellt können jeweils zwei oder mehr der Zugmittel 112a, 112b und/oder 112c an einen gemeinsamen Ankerpunkt (Gewicht 113) am Gewässerboden ankoppeln.

In die Randstruktur einer PV Einheit 100 bzw. eines PV-Kraftwerks 1000 können optional Elemente als Wellenbrecher oberflächennah sehr kostengünstig integriert werden (nicht dargestellt). In Verbindung mit der Absenkung des Modulfeldes bei Überschreitung bestimmter kritischer Wellenparameter können diese Elemente klassische sehr kostenintensive Wellenbrecher ersetzen, die eine große vertikale Ausdehnung haben. Diese Konfiguration ermöglicht eine sichere und wirtschaftliche Realisierung von PV-Kraftwerken unter Offshore-Bedingungen.

Mit den beschriebenen Komponenten ist eine Optimierung der gesamten PV-Einheit 100 und eines PV-Kraftwerkes 1000 derart möglich, dass die Position der PV-Einheit sicher gehalten wird, aber Wellenbewegungen den Auftrieb so wenig wie möglich variieren und geringst mögliche Kräfte in die Struktur der PV-Einheit eingebracht werden und dadurch die Belastungen minimiert werden. Ein PV-Kraftwerk verfügt, verglichen mit anderen gleich großen schwimmenden Strukturen, über ein sehr geringes Eigengewicht und damit prinzipbedingt auch über geringe Systemkosten.

PV-Einheiten 100 können aus rechteckigen oder quadratischen PV-Elementen 130 bestehen und eine rechteckige oder quadratische Ausdehnung haben. PV-Elemente 130 können auch alle anderen Formen wie Sechsecke (Figur 6) oder allgemein polygonale oder runde Formen aufweisen, und aus ihrer Gesamtheit PV-Einheiten 100 mit beliebiger Ausdehnung bilden.

Eine PV-Einheit 100 der beschriebenen Art hat weiterhin beim Bau und der Installation unter anderem folgende Vorteile: Der Transport der Komponenten, Bojen und Seile, Auftriebskörper und der anderen Komponenten ist mit üblichen Transportmitteln (Seetransport, LKW, Zug,...) möglich. Fast alle Komponenten können vorkonfektioniert bzw. gebaut werden, eine schnelle und systematische Montage der PV-Einheit und auch der Austausch defekter Komponenten ist modular möglich.

**Bezugszeichenliste**

| 100 | PV-Einheit |
|---|---|
| 1000 | PV-Kraftwerk |

| 110 | Feldhalter ("Struktur A") |
|---|---|
| 111 | Positionsboje, lange Zylinderboje |
| 111a | Bojenrohr |
| 111b | Gewicht |
| 111c | vertikal wirkendes Dämpfungselement, vertikale Strömungsbremse |
| 111e | horizontal wirkendes Dämpfungselement |
| 111d, f | Laufeinheit |
| 111g | Linearführung |
| 111h | Bojenhalter |
| 111j | Arretierungseinheit |
| 111k | Anschlagplatte |
| 111m | Stoßdämpfer |
| 111n | Federelemente |
| 112, 112a, b, c | Zugmittel zum Fixierungspunkt |
| 113 | Gewicht |
| 114 | internes Zugmittel |
| 115 | vertikale Begrenzungen |
| 116 | Stabilisierungsboje |
| 117 | Umlenkboje |
| 118 | Außenumrahmung, Randstruktur |

| 120 | Modulfeld ("Struktur B") |
|---|---|
| 121 | Verbindungen zwischen PV-Elementen |

| 130 | PV-Element |
|---|---|
| 131 | PV-Modul |
| 132 | Rahmen |
| 133 | Halteseil |
| 135 | Abtriebskörper |

| GB | Gewässerboden oder terrestrischer Boden |
|---|---|
| GO | Gewässeroberfläche |
| ST | Schutztiefe |
| LU | Luft |
| WA | Wasser |
| G | Gewicht |

**Patentansprüche**

1. PV-Einheit (100) für den Einsatz auf Gewässern, enthaltend

   - ein Modulfeld (120) mit mindestens einem PV-Modul (131);
   - einen Feldhalter (110), welcher dazu eingerichtet ist, das Modulfeld (120) zwischen einer Betriebsposition an der Gewässeroberfläche (GO) und einer Tauchposition (ST) unterhalb der Gewässeroberfläche (GO) verlagern zu können;
   wobei
   - der Feldhalter (110) Fixierungsmittel (111, 113) zur Ankopplung an den Boden (GB) und/oder an die Gewässeroberfläche (GO) aufweist; und
   - das Modulfeld (120) relativ zu dem Feldhalter (110) in einer Richtung beweglich ist;

   **dadurch gekennzeichnet, dass** der Feldhalter (110) mindestens ein im Wesentlichen vertikal verlaufendes Führungselement (111) aufweist, mit dem das Modulfeld (120) beweglich gekoppelt ist, und/oder die Beweglichkeit des Modulfeldes (120) gegenüber dem Feldhalter (110) veränderlich ist.

2. PV-Einheit (100) nach Anspruch 1,
   **dadurch gekennzeichnet, dass** das Modulfeld (120) bis zu mindestens einer Anschlagposition (115) gegenüber dem Feldhalter (110) beweglich ist.

3. PV-Einheit (100) nach mindestens einem der vorhergehenden Ansprüche,
   **dadurch gekennzeichnet, dass** das Modulfeld (120) und/oder der Feldhalter (110)

   - mindestens einen Auftriebskörper (111, 116, 117) und/oder
   - mindestens einen Abtriebskörper (135) mit variablem Abtrieb enthält oder hiermit gekoppelt ist.

**4.** PV-Einheit (100) nach mindestens einem der vorhergehenden Ansprüche, **dadurch gekennzeichnet, dass** das Führungselement (111) eine beweglich gelagerte Laufeinheit (111d, 111f) aufweist, mit welcher das Modulfeld (120) verbunden ist oder verbindbar ist.

**5.** PV-Einheit (100) nach mindestens einem der vorhergehenden Ansprüche, **dadurch gekennzeichnet, dass** sie einen Auftriebskörper (111) enthält, der eine langgestreckte Form aufweist, wobei das Verhältnis von Breite zu Länge vorzugsweise 1:2 oder weniger beträgt.

**6.** PV-Einheit (100) nach Anspruch 5, **dadurch gekennzeichnet, dass** der Auftriebskörper (111) dazu eingerichtet ist, in Wasser im Wesentlichen eine vertikale Ausrichtung anzunehmen.

**7.** PV-Einheit (100) nach mindestens einem der vorhergehenden Ansprüche, **dadurch gekennzeichnet, dass** das Modulfeld (120) entlang eines Auftriebskörpers (111) beweglich ist.

**8.** PV-Einheit (100) nach mindestens einem der vorhergehenden Ansprüche, **dadurch gekennzeichnet, dass** sie einen Auftriebskörper (111) enthält mit mindestens einem Dämpfungselement (111c, 111e) zur Dämpfung seiner Bewegung in Wasser.

**9.** PV-Einheit (100) nach mindestens einem der vorhergehenden Ansprüche, **dadurch gekennzeichnet, dass** sie mindestens einen Auftriebskörper (116) enthält, der dazu eingerichtet ist, im Betriebszustand eine Position unterhalb der Gewässeroberfläche (GO) anzunehmen, wobei diese Position vorzugsweise an der Tauchposition (ST) oder darunter liegt.

**10.** PV-Einheit (100) nach mindestens einem der vorhergehenden Ansprüche, **dadurch gekennzeichnet, dass** mindestens ein Fixierungsmittel (111, 113, 117) zur unmittelbaren und/oder mittelbaren Ankopplung an den Boden und/oder an die Gewässeroberfläche (GO) in vertikaler Richtung gesehen außerhalb der Fläche des Modulfeldes (120) liegt.

**11.** PV-Einheit (100) nach mindestens einem der vorhergehenden Ansprüche, **dadurch gekennzeichnet, dass** sie dazu eingerichtet ist, ein Verfahren nach Anspruch 12 und/oder 13 auszuführen.

**12.** Verfahren zum Betrieb einer PV-Einheit (100) gemäß den Ansprüchen 1 bis 11, enthaltend ein Modulfeld (120) mit mindestens einem PV-Modul (131) auf einem Gewässer,

**dadurch gekennzeichnet, dass** das Modulfeld (120) situationsabhängig

- zu Reinigungszwecken;
- und/oder zur Unterbrechung oder Reduzierung der Stromproduktion;
- und/oder bei geringer Sonneneinstrahlung;
- und/oder wenn die Sonneneinstrahlung unterhalb eines vorgegebenen Minimalwertes liegt;
- und/oder nachts;
- und/oder aus Sicherheitsgründen;
- und/oder zur Kühlung;
- und/oder zu Wartungszwecken;
- und/oder aus verkehrstechnischen Gründen;

zwischen einer Betriebsposition an der Gewässeroberfläche (GO) und einer Tauchposition (ST) unterhalb der Gewässeroberfläche (GO) verlagert wird.

**13.** Verfahren zum Betrieb einer PV-Einheit (100) nach mindestens einem der Ansprüche 1 bis 11, **dadurch gekennzeichnet, dass** das Modulfeld (120) situationsabhängig bei Wellengang und/oder Sturm oberhalb einer gegebenen Stärke zwischen einer Betriebsposition an der Gewässeroberfläche (GO) und einer Tauchposition (ST) unterhalb der Gewässeroberfläche (GO) verlagert wird.

**14.** Modulfeld (120) für eine PV-Einheit (100) nach mindestens einem der Ansprüche 1 bis 11.

**15.** Feldhalter (110) für eine PV-Einheit (100) nach mindestens einem der Ansprüche 1 bis 11.

**Claims**

**1.** Photovoltaic unit (100) for waters, comprising

- a module array (120) with at least one PV module (131);
- an array holder (110) configured to displace the module array (120) between an operating position on the surface of the water (GO) and a submerged position (ST) below the surface of the water (GO);
wherein
- the array holder (110) has fixing means (111, 113) for coupling to the ground (GB) and/or to the water surface (GO); and
- the module array (120) is movable in one direction relative to the array holder (110);

**characterized in that**

the array holder (110) has at least one substantially vertically extending guide element (111), to which the module array (120) is movably coupled, and/or
the mobility of the module array (120) relative to the array holder (110) is variable.

2. Photovoltaic unit (100) according to claim 1, **characterized in that** the module array (120) is movable relative to the array holder (110) up to at least one stop position (115).

3. Photovoltaic unit (100) according to at least one of the preceding claims, **characterized in that** the module array (120) and/or the array holder (110) contains

- at least one buoyancy body (111, 116, 117) and/or
- at least one sinking body (135) with variable downforce or is coupled thereto.

4. Photovoltaic unit (100) according to at least one of the preceding claims, **characterized in that** the guide element (111) comprises a movably mounted running unit (111d, 111f) to which the module array (120) is connected or can be connected.

5. Photovoltaic unit (100) according to at least one of the preceding claims, **characterized in that** it comprises a buoyancy body (111) which has an elongated shape, the ratio of width to length preferably being 1:2 or less.

6. Photovoltaic unit (100) according to claim 5, **characterized in that** the buoyant body (111) is configured to assume a substantially vertical orientation in water.

7. Photovoltaic unit (100) according to at least one of the preceding claims, **characterized in that** the module array (120) is movable along a buoyancy body (111).

8. Photovoltaic unit (100) according to at least one of the preceding claims, **characterized in that** it comprises a buoyancy body (111) with at least one damping element (111c, 111e) for damping its movement in water.

9. Photovoltaic unit (100) according to at least one of the preceding claims, **characterized in that** it comprises at least one buoyancy body (116) which is configured to assume a position below the water surface (GO) in the operating state, this position preferably being at the submerged position (ST) or below.

10. Photovoltaic unit (100) according to at least one of the preceding claims, **characterized in that** at least one fixing means (111, 113, 117) for direct and/or indirect coupling to the ground and/or to the water surface (GO) is located outside the area of the module array (120) when seen in the vertical direction.

11. Photovoltaic unit (100) according to at least one of the preceding claims, **characterized in that** it is configured to carry out a method according to claim 12 and/or 13.

12. Method for operating a photovoltaic unit (100) according to claims 1 to 11, comprising a module array (120) with at least one photovoltaic module (131) on a body of water,

**characterized in that** the module array (120) is displaced depending on the situation

- for cleaning purposes;
- and/or for interrupting or reducing electricity production
- and/or when solar radiation is low;
- and/or when solar radiation is below a predefined minimum value;
- and/or at night;
- and/or for safety reasons;
- and/or for cooling purposes;
- and/or for maintenance purposes;
- and/or for traffic reasons;

between an operating position on the surface of the water (GO) and a submerged position (ST) below the surface of the water (GO).

13. Method for operating a photovoltaic unit (100) according to at least one of claims 1 to 11, **characterized in that** the module array (120) is displaced between an operating position on the surface of the water (GO) and a submerged position (ST) below the surface of the water (GO) depending on the situation in the event of waves and/or storms above a given level.

14. Module array (120) for a photovoltaic unit (100) according to at least one of claims 1 to 11.

15. Array holder (110) for a photovoltaic unit (100) according to at least one of claims 1 to 11.

**Revendications**

1. Unité photovoltaïque (100) pour l'utilisation sur les eaux, comprenant

- un tableau de modules (120) avec au moins un module photovoltaïque (131);
- un support de tableau (110) qui est conçu pour pouvoir déplacer le tableau de modules (120) entre une position de fonctionnement à la surface de l'eau (GO) et une position de plongée (ST) en dessous de la surface de l'eau (GO) ; dans lequel
- le support de tableau (110) comprend des moyens de fixation (111, 113) pour l'accouplement au sol (GB) et/ou à la surface de l'eau (GO) ; et
- le tableau de modules (120) est mobile dans une direction par rapport au support de tableau (110) ;

**caractérisée en ce que**

le support de tableau (110) comprend au moins un élément de guidage (111) s'étendant essentiellement verticalement, avec lequel le tableau de modules (120) est couplé de manière mobile, et/ou la mobilité du tableau de modules (120) par rapport au support de tableau (110) est variable.

2. Unité photovoltaïque (100) selon la revendication 1, **caractérisée en ce que** le tableau de modules (120) est mobile jusqu'à au moins une position de butée (115) par rapport au support de tableau (110).

3. Unité photovoltaïque (100) selon au moins l'une des revendications précédentes, **caractérisée en ce que** le tableau de modules (120) et/ou le support de tableau (110) contient

- au moins un corps de flottaison (111, 116, 117) et/ou
- au moins un corps de force ascensionnelle (135) à portance négative variable
ou est couplé à celui-ci.

4. Unité photovoltaïque (100) selon au moins l'une des revendications précédentes, **caractérisée en ce que** l'élément de guidage (111) comprend une unité de roulement (111d, 111f) montée de manière mobile, à laquelle le tableau de modules (120) est relié ou peut être relié.

5. Unité photovoltaïque (100) selon au moins l'une des revendications précédentes, **caractérisée en ce qu'**elle comprend un corps de flottaison (111) qui a une forme allongée, dans lequel le rapport de la largeur à la longueur est de préférence de 1:2 ou moins.

6. Unité photovoltaïque (100) selon la revendication 5, **caractérisée en ce que** le corps de flottaison (111) est conçu pour prendre une orientation essentiellement verticale dans l'eau.

7. Unité photovoltaïque (100) selon au moins l'une des revendications précédentes, **caractérisée en ce que** le tableau de modules (120) est mobile le long d'un corps de flottaison (111).

8. Unité photovoltaïque (100) selon au moins l'une des revendications précédentes, **caractérisée en ce qu'**elle comprend un corps de flottaison (111) comportant au moins un élément d'amortissement (111c, 111e) pour amortir son mouvement dans l'eau.

9. Unité photovoltaïque (100) selon au moins l'une des revendications précédentes, **caractérisée en ce qu'**elle comprend au moins un corps de flottaison (116) conçu pour prendre, en état de fonctionnement, une position en dessous de la surface de l'eau (GO), dans lequel cette position est de préférence située à la position de plongée (ST) ou en dessous.

10. Unité photovoltaïque (100) selon au moins l'une des revendications précédentes, **caractérisée en ce qu'**au moins un moyen de fixation (111, 113, 117) pour le couplage direct et/ou indirect au sol et/ou à la surface de l'eau (GO) est situé, vu dans le sens vertical, en dehors de la surface du tableau de modules (120).

11. Unité photovoltaïque (100) selon au moins l'une des revendications précédentes, **caractérisée en ce qu'**elle est conçue pour mettre en œuvre un procédé selon la revendication 12 et/ou 13.

12. Procédé d'exploitation d'une unité photovoltaïque (100) selon les revendications 1 à 11, contenant un tableau de modules (120) avec au moins un module photovoltaïque (131) sur un plan d'eau,

**caractérisé en ce que** le tableau de modules (120) est déplacé en fonction de la situation

- à des fins de nettoyage;
- et/ou pour interrompre ou réduire la production d'électricité;
- et/ou lorsque le rayonnement solaire est faible;
- et/ou lorsque le rayonnement solaire est inférieur à une valeur minimale prédéfinie;
- et/ou pendant la nuit;
- et/ou pour des raisons de sécurité;
- et/ou pour le refroidissement;
- et/ou à des fins de maintenance;
- et/ou pour des raisons de circulation;

entre une position de fonctionnement à la surface de l'eau (GO) et une position de plongée (ST) en dessous de la surface de l'eau (GO).

13. Procédé d'exploitation d'une unité photovoltaïque (100) selon au moins l'une des revendications 1 à 11, **caractérisé en ce que** le tableau de modules (120) est déplacé en fonction de la situation en cas de houle et/ou de tempête au-dessus d'une force déterminée entre une position d'exploitation à la surface de l'eau (GO) et une position de plongée (ST) en dessous de la surface de l'eau (GO).

14. Tableau de modules (120) pour une unité photovoltaïque (100) selon au moins l'une des revendications 1 à 11.

15. Support de tableau (110) pour une unité photovoltaïque (100) selon au moins l'une des revendications 1 à 11.

Fig. 1

Fig. 2

Fig. 3

GO

130

131

120

121

130

135

Fig. 4

GO

131

130

120'

121

135

Fig. 5

EP 4 315 592 B1

Fig. 6

Fig. 7

111d

Fig. 8

111a

111

111a

111

111e

111e

111c

111b

111b

111c

Fig. 9

111

111

111f

111g

111f

111g

# Fig. 10

Fig. 11

Fig. 12

Fig. 13

Fig. 14

111

113

Fig. 15

1000

120

113

118

1000

117

111

120

112c

117

113

112a    114    112b  116         113

EP 4 315 592 B1

34

Fig. 16

**IN DER BESCHREIBUNG AUFGEFÜHRTE DOKUMENTE**

**In der Beschreibung aufgeführte Patentdokumente**

- EP 3845826 A1

- WO 2010026542 A1